# EUROPEAN PATENT SPECIFICATION

(11) **EP 1 369 666 B1**
(45) Date of publication and mention of the grant of the patent: **31.07.2013**
(21) Application number: 03012607.2
(22) Date of filing: 03.06.2003
(51) Int. Cl.: G01C 19/56

(54) **Vibrating gyroscope using a tuning fork vibrator and electronic apparatus using such a vibrating gyroscope**
Schwingungsgyroskop mit einem Stimmgabelschwinger und elektronische Vorrichtung mit solch einem Schwingungsgyroskop
Gyroscope avec un vibrateur à diapason et appareil électronique avec un tel gyroscope

(30) Priority: 04.06.2002 JP 2002162805; 18.11.2002 JP 2002334328
(43) Date of publication of application: 10.12.2003
(60) Divisional application: 10188715.6
(73) Proprietor: MURATA MANUFACTURING CO., LTD., Nagaokakyo-shi, Kyoto 617-8555 (JP)
(72) Inventor: Fujimoto, Katsumi, c/o (A170) Intell. Prop. Dept., Nagaokakyo-shi, Kyoto-fu 617-8555 (US); Yamamoto, Hironari, c/o (A170) Intell. Prop. Dept., Nagaokakyo-shi, Kyoto-fu 617-8555 (US)
(74) Representative: Schoppe, Fritz

(56) References cited:
- EP-A- 0 611 949
- EP-A- 0 798 538
- EP-A- 0 844 461
- DE-A- 10 053 534
- US-A- 5 757 107
- US-A- 6 134 963
- US-B1- 6 257 058
- PATENT ABSTRACTS OF JAPAN vol. 1998, no. 06, 30 April 1998 (1998-04-30) -& JP 10 038579 A (FUJITSU LTD), 13 February 1998 (1998-02-13)
- PATENT ABSTRACTS OF JAPAN vol. 1997, no. 10, 31 October 1997 (1997-10-31) -& JP 09 145378 A (ALPS ELECTRIC CO LTD), 6 June 1997 (1997-06-06)
- PATENT ABSTRACTS OF JAPAN vol. 2000, no. 10, 17 November 2000 (2000-11-17) -& JP 2000 193458 A (MURATA MFG CO LTD), 14 July 2000 (2000-07-14)
- PATENT ABSTRACTS OF JAPAN vol. 017, no. 207 (P-1525), 22 April 1993 (1993-04-22) -& JP 04 348218 A (MATSUSHITA ELECTRIC IND CO LTD), 3 December 1992 (1992-12-03)
- PATENT ABSTRACTS OF JAPAN vol. 1998, no. 09, 31 July 1998 (1998-07-31) -& JP 10 111132 A (MURATA MFG CO LTD), 28 April 1998 (1998-04-28)

## Description

### BACKGROUND OF THE INVENTION

### 1. Field of the Invention

The present invention relates to a tuning fork vibrator for use in a device for correcting an error due to hand movements during operation of a video camera, for example; a vibrating gyroscope using the vibrator; an electronic apparatus using the vibrator; and a manufacturing method of the tuning fork vibrator.

### 2. Description of the Related Art

Conventional tuning fork vibrators are known in Patent Document 1 (referred to below as Conventional Example 1) and Patent Document 2 (referred to below as Conventional Example 2), for example.

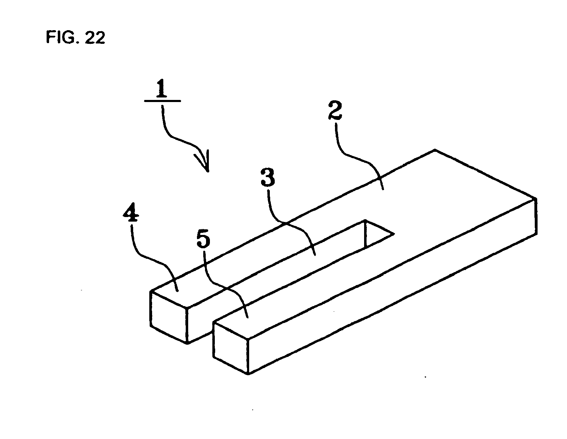

In a tuning fork vibrator of the Conventional Example 1, as shown in Fig. 22, a tuning fork vibrator 1 is made of a long plate-like piezoelectric member 2, in which a slit 3 is former from one principal surface thereof down to the other principal surface by cutting the piezoelectric member 2 from one end thereof so as to form two legs 4 and 5.

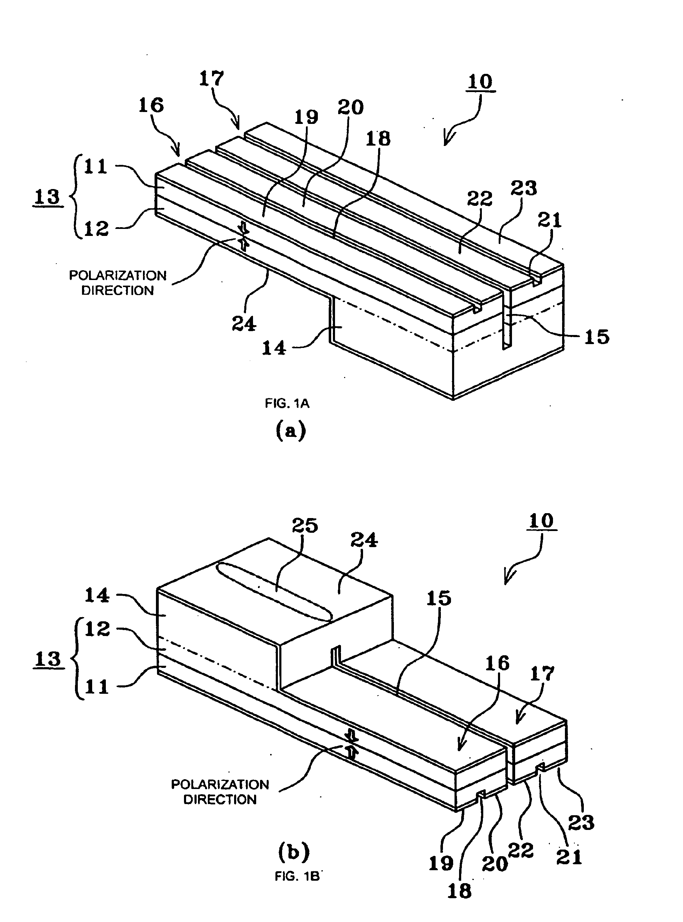

A tuning fork vibrator in the Conventional Example 2, as shown in Fig. 1 of the Pater Document 2, comprises two piezoelectric columnar vibrators arranged with each one end fixed to a base.

The description of driving methods of conventional tuning fork vibrators is omitted.

### [Patent Document 1]

### Japanese Unexamined Patent Application Publication No. 8-128830

### [Patent Document 2]

### Japanese Unexamined Patent Application Publication No. 2000-193458

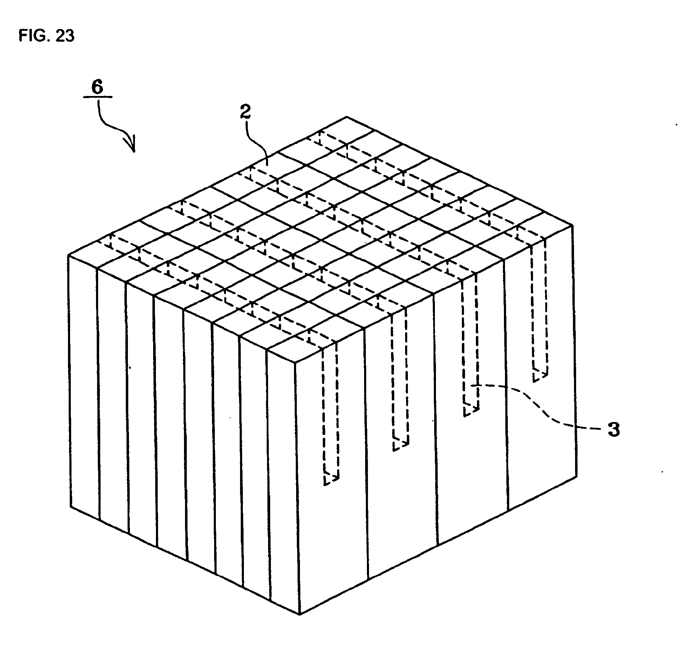

It is difficult to manufacture the tuning fork vibrator according to the Conventional Example 1 by cutting a piezoelectric member from its one principal surface or the other principal surface using a dicing saw to form a slit between two legs. Then, as shown in Fig. 23, a block 6 is made by bonding a plurality of piezoelectric members prior to forming slits in its thickness direction and the width direction; slits 3 are formed on the block 6 using a wire saw or a dicing saw; and the piezoelectric members 2 bonded together are individually separated.

This case has a problem of the complicated manufacturing process such as bonding the piezoelectric members at first and separating them afterward. If an electrode is formed on one principal surface or the other principal surface of the tuning fork vibrator, the electrode has to be formed for each separated tuning fork vibrator, also producing a problem of the complicated manufacturing process. If the electrodes are formed on a mother substrate prior to forming slits, the electrode-forming process must be separated from the slit-forming process thereafter, so that positional accuracies of the electrodes on a leg portion cannot be improved.

On the other hand, since in the tuning fork vibrator according to the Conventional Example 2, each vibrator is simply columnar-shaped, it is easily separated from a mother substrate using a dicing saw. Electrodes formed in advance on a front surface of the mother substrate, on which grooves are made by a dicing saw, can be separated prior to separating each vibrator by the same dicing saw. Since the separation of the electrodes and the separation of the vibrators can be performed in one process, in practice, the problem like in the Conventional Example 1 does not arise.

However, in the case of the Conventional Example 2, because the vibrator is not integral with a base, the number of parts increases, complicating the manufacturing process. Also, when two vibrators are fixed to one base, it is difficult to achieve a well-balanced tuning fork vibrator by positional displacement and unbalanced fixing strength.

### SUMMARY OF THE INVENTION

In order to solve the problems mentioned above, it is an object of the present invention to provide a vibrating gyroscope using a tuning fork vibrator and an electronic apparatus using the tuning fork vibrator. This object is achieved by a vibrating gyroscope according to claims 1, 3 and 5 and an electronic apparatus according to claim 7.
A tuning fork vibrator may comprise a long plate-like vibration unit having one principal surface and the other principal surface; a base disposed at one end of the other principal surface of the vibration unit in the longitudinal direction, wherein at least one slit for dividing the vibration unit into at least two legs along the longitudinal direction symmetrically in the width direction of the vibration unit is provided in the vibration unit, and the slit is provided to include a portion of the base close to the vibration unit.

In the tuning fork vibrator, the vibration unit is divided into at least three legs by the slits, and further include a support pin fixed at the leg located in the vicinity of the center of the other principal surface, said support pin supporting the vibration unit and the base in midair.

The base may have a substantial U-shape including three straight line-segments surrounding the vibration unit from three directions, which are from said one end side of the longitudinal direction and both sides of the width direction. The base may have a rectangular frame-shape surrounding the vibration unit from four directions, which are from both end sides of the longitudinal direction and both sides of the width direction.

In the tuning fork vibrator the base may be integrated at least with the other principal surface of the vibration unit. Alternatively, the base may be provided separately from the vibration unit, and the base is bonded to the vibration unit.

Furthermore, the vibration unit may be a bimorph structure including bonded piezoelectric members polarized opposite to each other in a direction of the thickness between one principal surface and the other principal surface of the vibration unit; a unimorph structure includes a piezoelectric member polarized in the thickness direction and a non-piezoelectric material which are bonded together; or a structure comprising a non-piezoelectric material, in which a piezoelectric element polarized in the thickness direction of the vibration unit provided on one principal surface of the non-piezoelectric material.

A vibrating gyroscope according to the present invention is characterized in that the tuning fork vibrator described above is used.

A vibrating gyroscope according to the present invention comprises a tuning fork vibrator having two long legs formed by bonding piezoelectric members polarized opposite to each other in a direction of the thickness between one principal surface and the other principal surface, so as to be arranged in a tuning fork shape with one end fixed, wherein two electrodes divided in the width direction are formed on one principal surface of the respective two legs while an electrode is formed on the other principal surface, wherein among the four electrodes formed on the one principal surface of the respective two legs, two electrodes disposed inside-to-inside or outside-to-outside are connected together to define a driving electrode and the remaining two electrodes become a detection electrode serving also as a feedback electrode, and wherein the entire electrodes formed on the other principal surfaces of the two legs are further connected together while being connected to a reference voltage or being floated. This tuning fork vibrator may use a tuning fork vibrator having the bimorph structure described above.

Also, a vibrating gyroscope according to the present invention comprises a tuning fork vibrator having two long legs formed by bonding a piezoelectric member, polarized in the thickness direction and having two electrodes divided in the width direction on one principal surface and an electrode on the other principal surface, to a non-piezoelectric element, so as to have the one principal surface and the other principal surface, respectively, and to be arranged in a tuning fork shape with one end fixed, wherein among the four electrodes formed on the one principal surface of the respective two legs, two electrodes disposed inside-to-inside or outside-to-outside are connected together to have a driving electrode and the remaining two electrodes become a detection electrode serving also as a feedback electrode, and wherein the entire electrodes formed on the other principal surfaces of the two legs are further connected together while being connected to a reference voltage or being floated. This tuning fork vibrator may use a tuning fork vibrator having the unimorph structure described above.

A vibrating gyroscope according to the present invention comprises a tuning fork vibrator that comprises two long legs comprising a non-piezoelectric material and is arranged in a tuning fork shape with one end fixed, wherein piezoelectric elements polarized in a thickness direction are provided on one principal surface of the respective two legs, each of the piezoelectric elements having a lower electrode, a piezoelectric layer formed on the lower electrode, and two upper electrodes formed on the piezoelectric layer and divided in the width direction of the legs, and wherein among the four upper electrodes, two electrodes disposed inside-to-inside or outside-to-outside are connected together to have a driving electrode and the remaining two electrodes become a detection electrode serving also as a feedback electrode, and the entire lower electrodes are further connected together while being connected to a reference voltage or being floated. This tuning fork vibrator may use a tuning fork vibrator having a vibration unit made of the non-piezoelectric material.

An electronic apparatus according to the present invention comprises the vibrating gyroscope described above.

Next, a manufacturing method of a tuning fork vibrator may comprise the steps of forming at least one long deletion part having a predetermined length, width, and depth and at least one long non-deletion part arranged adjacent to the deletion part in the width direction thereof by scraping the other principal surface of a mother substrate having one principal surface and the other principal surface; forming a first slit for completely dividing the deletion part along width directions of the deletion part and the non-deletion part from the one principal surface of the mother substrate; and forming second slits for cutting the mother substrate in directions, one slit in the width direction and another slit in the longitudinal direction, of the deletion part and the non-deletion part, so as to have a block with a rectangular shape in plan view longer in the width direction of the deletion part and the non-deletion part and having one piece of the deletion part and one piece of the non-deletion part, wherein the first slit is provided in the longitudinal direction of the block with the rectangular shape in plan view so that the block is symmetrical in the width direction thereof.

Also, a manufacturing method of a tuning fork vibrator may comprise the steps of forming at least one first slit in parallel on a mother substrate having one principal surface and the other principal surface from the one principal surface of the mother substrate, the first slit having a first depth smaller than the thickness of the mother substrate; forming second slits on the mother substrate from the one principal surface thereof in directions, one second slit along the longitudinal direction of the first slit, another second slit along the direction perpendicular thereto, so that at least one first slit is included within a rectangular shape in a plan view formed in the mother substrate along the longitudinal direction of the shape, the rectangular shape being longer in the longitudinal direction of the first slit, the second slit having a second depth smaller than the thickness of the mother substrate and larger than the first depth; forming a deletion part from the other principal surface of the mother substrate by cutting a position corresponding to one end in the longitudinal direction of a part of the rectangular shape in plan view formed by the second slits until the first slit is completely exposed; and deleting part of the mother substrate having no deletion part formed thereon from the one principal surface of the mother substrate until the second slits are completely exposed, wherein the first slit is provided in the longitudinal direction of the part of the rectangular shape in plan view so that the part is symmetrical in the width direction thereof.

Furthermore, a manufacturing method of a tuning fork vibrator may comprise the steps of bonding at least one long plate-like base member arranged in parallel in the width direction thereof on the other principal surface of a mother substrate having one principal surface and the other principal surface, the base member having a predetermined length, width, and thickness; forming a first slit for completely dividing the mother substrate from the one principal surface of the mother substrate along the width direction of the base member; and forming second slits for cutting the mother substrate and the base member in directions of the base member, one second slit in the width direction and another second slit in the longitudinal direction, so as to have a block with a rectangular shape in plan view longer in the width direction of the base member, the block with the rectangular shape having one piece of only the base member and one piece of a portion of the mother substrate to which the base member is bonded, wherein the first slit is provided in the longitudinal direction of the block with the rectangular shape in plan view so that the block is symmetrical in the width direction thereof.

A manufacturing method of a tuning fork vibrator may comprise the steps of bonding one principal surface of a base mother substrate having a recess or a through-hole with a rectangular shape in plan view formed therein on the other principal surface of a mother substrate having one principal surface and the other principal surface from the one principal surface of the mother substrate; forming a first slit for completely dividing the mother substrate from the one principal surface of the mother substrate; and forming a second slit for completely dividing the mother substrate and the base mother substrate, wherein the first slit includes at least three slits, which are arranged along the longitudinal direction of the recess or the through-hole in parallel to each other and pass through within the recess or the through-hole in plan view, and wherein the second slit includes slits, which are arranged in longitudinal and width directions of the recess or the through-hole so that the recess or the through-hole is completely included within the rectangular shape in plan view formed by cutting, and a slit for completely dividing the recess or the through-hole of the base mother substrate into two, one side and the other side, along the longitudinal direction.

Furthermore, a manufacturing method of a tuning fork vibrator may comprise the steps of bonding one principal surface of a base mother substrate having a recess or a through-hole with a rectangular shape in plan view formed therein on the other principal surface of a mother substrate having one principal surface and the other principal surface from the one principal surface of the mother substrate; forming a first slit for completely dividing the mother substrate from the one principal surface of the mother substrate; and forming a second slit for completely dividing the mother substrate and the base mother substrate, wherein the first slit includes at least three slits arranged along the longitudinal direction of the recess or the through-hole in parallel to each other and passing through within the recess or the through-hole in plan view and one slit arranged along the width direction of the recess or the through-hole, and wherein the second slit includes slits that are arranged in directions of the recess or the through-hole, one second slit along the longitudinal direction, another second slit along the width direction, so that the recess or the through-hole is completely included within the rectangular shape in plan view formed by cutting.

Furthermore, a manufacturing method of a tuning fork vibrator may comprise the steps of forming a recess rectangular in plan view and having a predetermined depth on the other principal surface of a mother substrate having one principal surface and the other principal surface; forming a first slit from the one principal surface of the mother substrate, the depth of the first slit being larger than the length obtained by subtracting the predetermined depth of the recess from the thickness of the mother substrate; and forming a second slit for completely dividing the mother substrate, wherein the first slit includes at least three slits, which are arranged along the longitudinal direction of the recess in parallel to each other and pass through within the recess in plan view, and wherein the second slit includes slits, which are arranged in directions of the recess, one second slit along the longitudinal direction, another second slit along the width direction, so that the recess is completely included within the rectangular shape in plan view formed by cutting, and a slit for completely dividing the recess into two along the longitudinal direction.

Furthermore, a manufacturing method of a tuning fork vibrator may comprise the steps of forming a recess rectangular in plan view and having a predetermined depth on the other principal surface of a mother substrate having one principal surface and the other principal surface; forming a first slit from the one principal surface of the mother substrate, the depth of the first slit being larger than the length obtained by subtracting the predetermined depth of the recess from the thickness of the mother substrate; and forming a second slit for completely dividing the mother substrate, wherein the first slit includes at least three slits arranged along the longitudinal direction of the recess in parallel to each other and passing through within the recess in plan view and one slit arranged along the width direction of the recess and passing through within the recess, and wherein the second slit includes slits arranged so that the recess is completely included within the rectangular shape in plan view formed by cutting.

By such methods described above, in a manufacturing method of the tuning fork vibrator , the manufacturing process can be simplified. Also, in the tuning fork vibrator, the precision in size of electrodes formed on the legs and the bottom is increased and the balance of the two legs with the base is improved. Moreover, the dispersion in characteristics between plural tuning fork vibrators can also be reduced.

In the vibrating gyroscope according to the present invention, an angular velocity can be detected with high precision.

In the electronic apparatus according to the present invention, since the vibrating gyroscope according to the present invention is provided, precise angular velocity information can be consistently obtained, so that the performance can be improved.

### BRIEF DESCRIPTION OF THE DRAWINGS

Figs. 1A and 1B are perspective views of a tuning fork vibrator according to an embodiment of the present invention;
Figs. 2A and 2B are process charts showing a manufacturing method of the tuning fork vibrator shown in Fig. 1;
Figs. 3A and 3B are process charts continued from Figs. 2A and 2B, showing the manufacturing method of the tuning fork vibrator shown in Figs. 1A and 1B;
Fig. 4 is a block diagram showing a skeletal configuration of a vibrating gyroscope according to an embodiment of the present invention;
Fig. 5 is a perspective view of a tuning fork vibrator according to another embodiment of the present invention;
Fig. 6 is a perspective view of a tuning fork vibrator according to still another embodiment of the present invention;
Figs. 7A and 7B are perspective views of a tuning fork vibrator according to still another embodiment of the present invention;
Figs. 8A and 8B are process charts showing a manufacturing method of the tuning fork vibrator shown in Figs. 7A and 7B;
Figs. 9A and 9B are process charts continued from Figs. 8A and 8B, showing the manufacturing method of the tuning fork vibrator shown in Figs. 7A and 7B;
Figs. 10A and 10B are perspective views of a tuning fork vibrator according to still another embodiment of the present invention;
Fig. 11 is a side view of the tuning fork vibrator shown in Figs. 10A and 10B;
Fig. 12 is a perspective view of a tuning fork vibrator according to still another embodiment of the present invention;
Fig. 13 is a block diagram showing a skeletal configuration of a vibrating gyroscope according to another embodiment of the present invention;
Fig. 14 is a side view of a vibrating gyroscope according to still another embodiment of the present invention;
Figs. 15A and 15B are perspective views of a tuning fork vibrator according to still another embodiment of the present invention;
Figs. 16A and 16B are process charts showing a manufacturing method of the tuning fork vibrator shown in Figs. 15A and 15B;
Figs. 17A and 17B are perspective views of a tuning fork vibrator according to still another embodiment of the present invention;
Figs. 18A and 18B are process charts showing a manufacturing method of the tuning fork vibrator shown in Figs. 17A and 17B;
Fig. 19 is a side view of a vibrating gyroscope according to still another embodiment of the present invention;
Figs. 20A and 20B are perspective views of a tuning fork vibrator according to still another embodiment of the present invention;
Fig. 21 is a perspective view of an electronic apparatus according to an embodiment of the present invention;
Fig. 22 is a perspective view of a conventional tuning fork vibrator; and
Fig. 23 is a process chart illustrating a process for forming legs of the tuning fork vibrator shown in Fig. 22.

### DESCRIPTION OF THE PREFERRED EMBODIMENTS

Figs. 1A and 1B are perspective views of a tuning fork vibrator according to an embodiment of the present invention. Fig. 1A is opposite to Fig. 1B only in an observing point. Referring to Figs. 1A and 1B, a tuning fork vibrator 10 comprises a long piezoelectric substrate 11 polarized in the thickness direction, a long piezoelectric substrate 12 polarized in a direction opposite to that of the piezoelectric substrate 11 and with one principal surface bonded on the other principal surface of the piezoelectric substrate 11, and a base 14 disposed in one end portion in the longitudinal direction of the other surface of the piezoelectric substrate 12. One principal surface of the base 14 faces the piezoelectric substrate 12. The piezoelectric substrate 12 and the base 14 are integrated together with the same piezoelectric material. The piezoelectric substrate 11 and the piezoelectric substrate 12 are called together as a vibration unit 13, and one principal surface of the piezoelectric substrate 11 is to be one principal surface of the vibration unit 13 while the other principal surface of the piezoelectric substrate 12 is to be the other principal surface of the vibration unit 13. The tuning fork vibrator 10 has not an electrode on the boundary between the piezoelectric substrates 11 and 12; alternatively an electrode may be disposed on the boundary.

The vibration unit 13 is split into two legs 16 and 17 constituting a tuning fork with a slit 15 formed along the longitudinal direction symmetrically in the width direction. One principal surface and the other principal surface of the respective two legs 16 and 17 are the same as one principal surface and the other principal surface of the vibration unit 13, respectively. The slit 15 is structured not only to split the vibration unit 13 but also to further cut off part of the base 14, when viewed from one principal surface of the vibration unit 13. As a result, the tuning fork vibrator 10 has a tuning fork structure having the two legs 16 and 17, each with one end fixed to the base 14 disposed on the other principal surface of the two legs 16 and 17. Thereby the two legs 16 and 17 have a bimorph structure of two piezoelectric members bonded together in polarizing directions opposite to each other.

On one principal surface of the leg 16, two electrodes 19 and 20 divided by a slit 18 are formed. Also, on one principal surface of the leg 17, two electrodes 22 and 23 divided by a slit 21 are formed. The slits 18 and 21 are formed along the longitudinal direction of the slit 15, and the depth of the respective slits 18 and 21 is slightly larger than the thickness of the electrode. In part, which is not bonded to the base 13, of the other principal surfaces of the legs 16 and 17, an electrode 24 extending from a side-face of the base 13 toward the other principal surface thereof is further formed.

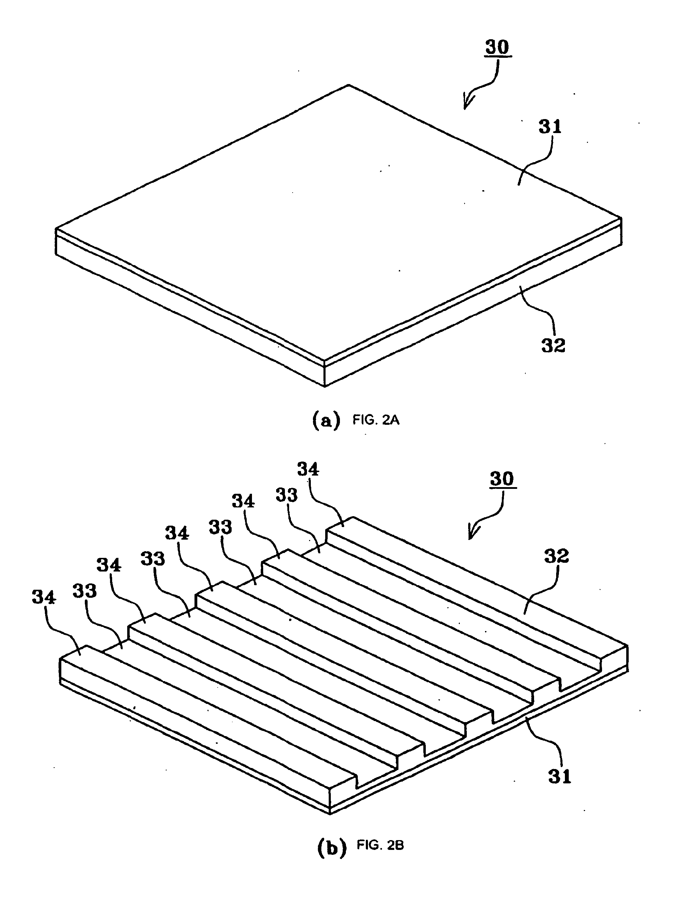

A manufacturing method of the tuning fork vibrator 10 will be described with reference to Figs. 2A to 3B.

First, as shown in Fig. 2A, a mother substrate 30 is prepared, in which piezoelectric mother substrates 31 and 32 are bonded together so that the piezoelectric mother substrate 31 is to be one principal surface while the piezoelectric mother substrate 32 is to be the other principal surface. The two piezoelectric mother substrates 31 and 32 are polarized in advance in thickness directions opposite to each other. Electrodes are mounted in advance on the entire of one and the other principal surfaces of the mother substrate 30.

Next, as shown in Fig. 2B, while the one principal surface of the mother substrate 30 with a dicing tape bonded thereon is faced downward, a plurality of long deletion parts 33, each having a predetermined length, width, and depth, are formed on the other principal surface, i.e., the piezoelectric mother substrate 32, by back-grinding. The depth of the back-grinding is to be smaller than the thickness of the piezoelectric mother substrate 32. The deletion part 33 here does not represent a part deleted by the back-grinding but a part remaining without being deleted. The plurality of deletion parts 33 are arranged in parallel in the width direction at equal intervals. Thereby, between the plurality of deletion parts 33, a plurality of similar long non-deletion parts 34 are formed. The deletion part 33 is adjacent to the non-deletion part 34 in the width direction. On the other principal surface of the deletion part 33 formed by the back-grinding, an electrode is mounted again by vapor deposition. At this time, the electrode is mounted not only on the other principal surface of the deletion part 33 but also on side surfaces at the boundaries of the non-deletion parts 34 so as to be conducted to electrodes on the other principal surfaces of the non-deletion parts 34.

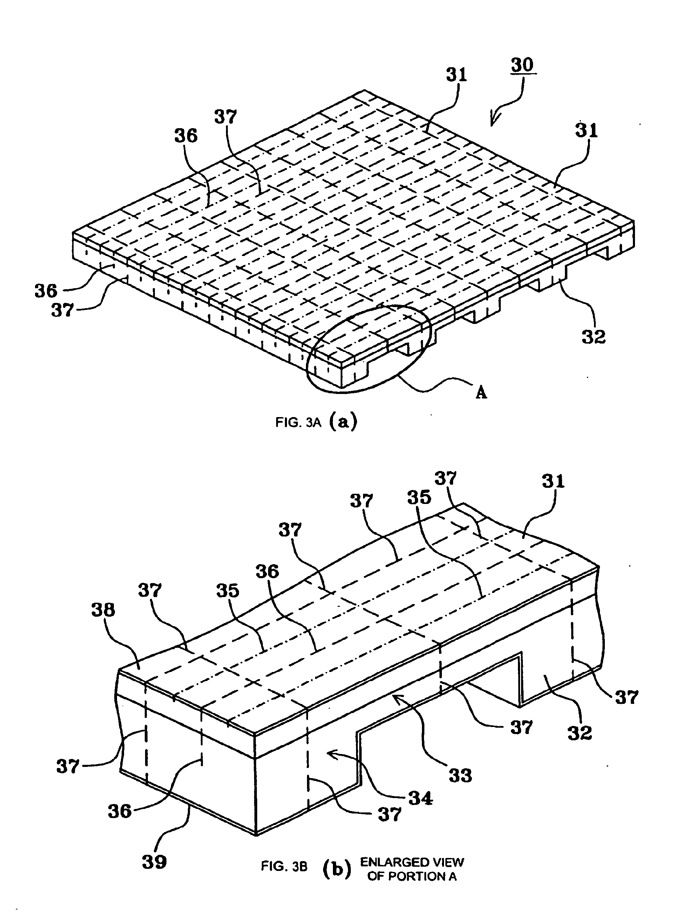

Then, as shown in Figs. 3A and 3B, while the other principal surface of the mother substrate 30 with a dicing tape bonded thereon is faced downward, slits 35, 36, and 37 are formed from the one principal surface with a dicing saw. The slits may be preferably formed in that order; however, the order is not limited to that. Fig. 3B is an enlarged view of an A portion of Fig. 3A.

The slit 35 is formed along the width directions of the deletion part 33 and the non-deletion part 34 so as to have a shallow groove on the one principal surface of the mother substrate 30. Thereby, an electrode 38 mounted on the one principal surface of the piezoelectric mother substrate 31 is perfectly divided by the slit 35.

The slit 36 is formed along the width directions of the deletion part 33 and the non-deletion part 34 so as to have a groove with an enough depth to perfectly divide the deletion part 33 from the one principal surface of the mother substrate 30. Therefore, the groove depth of the slit 36 is larger than the thickness of the deletion part 33. This slit 36 represents a first slit.

The slit 37 is provided so as to have a depth enough to perfectly divide the mother substrate 30 along the longitudinal and width directions of the deletion part 33 and the non-deletion part 34. At this time, the slits 37 along the longitudinal directions of the deletion part 33 and the non-deletion part 34 are arranged with exceptions so as to pass through the centerlines in the longitudinal direction of the deletion part 33 and the non-deletion part 34. Thereby, the mother substrate 30, having parts of the deletion part 33 and the non-deletion part 34, is divided into child substrates, each being rectangular shaped in plan view (viewed from the one principal surface of the mother substrate 30) longitudinally in the width directions of the deletion part 33 and the non-deletion part 34. This slit 37 represents a second slit.

In forming the slit 36 with a dicing saw, since the other principal surface of the deletion part 33 has not a dicing tape bonded thereon as in the other principal surface of the non-deletion part 34, the dicing is liable to produce chipping. Then, for preventing the chipping, the other principal surface of the deletion part 33 may rather be preferably hardened with wax.

The child substrate made in such a manner is equivalent to the tuning fork vibrator 10 shown in Figs. 1A and 1B. Therefore, in comparing Figs. 3A and 3B to Figs. 1A and 1B, the slit 35 corresponds to the slits 18 and 21 while the slit 36 corresponds to the slit 15. The electrode 38 divided by the slits 35 to 37 corresponds to the electrodes 19, 20, 22, and 23 while the electrode 39 divided by the slit 37 corresponds to the electrode 24.

By manufacturing the tuning fork vibrator 10 in such a method, the two legs 16 and 17 can be formed by cutting from the one principal surface with a dicing saw in the state of the mother substrate 30. Therefore, it is not necessary to separate piezoelectric substrates after bonding a plurality of the piezoelectric substrates in the thickness direction when forming a slit between two legs as in the Conventional Example 1, enabling the manufacturing process to be simplified.

The two legs 16 and 17 are formed with one dicing saw in one process. Therefore, the precision in size of the two legs 16 and 17 is highly improved, not producing the positional displacement between the legs and the fixing strength unbalanced with the base as in the Conventional Example 2. Furthermore, the four electrodes 19, 20, 22, and 23 are formed with one dicing saw in one process like in the two legs 16 and 17, so that the extremely high precision in size can be obtained. As a result, not only the dispersion in size between the legs of the tuning fork vibrator itself but also the dispersion in characteristics between plural tuning fork vibrators can be reduced.

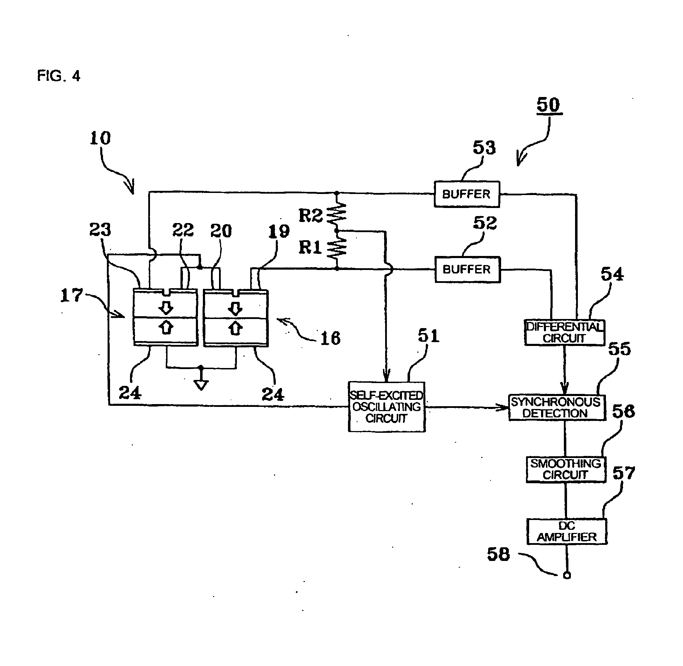

Next, the operation of a vibrating gyroscope using the tuning fork vibrator 10 will be described with reference to Fig. 4. Fig. 4 is a block diagram showing a skeletal configuration of the vibrating gyroscope. The tuning fork vibrator 10 for use in the vibrating gyroscope is operated by fixing a fixing region 25, which is a central portion of the other principal surface of the base 14 in the width direction, to an anchor block with a conductive adhesive. The reason of limiting a fixing position to the fixing region 25 is that the central portion of the base 14 in the width direction is a node of vibration of the tuning fork vibrator 10, so that if the fixing position is extended beyond the fixing region 25, the vibration is restrained, increasing vibration leakage. Therefore, the fixing region 25 may be preferably limited to the central portion of the other principal surface of the base 14 in the width direction as close as possible. Using the conductive adhesive enables the electrode 24 of the tuning fork vibrator 10 to be grounded via the anchor block. In addition, as for the tuning fork vibrator 10, the two legs 16 and 17 viewed from the other end are shown. The base 14 and the anchor block other than legs are not shown.

Referring to Fig. 4, a vibrating gyroscope 50 comprises the tuning fork vibrator 10, resistors R1 and R2, a self-excited oscillating circuit 51, buffer circuits 52 and 53, a differential circuit 54, a synchronous detection circuit 55, a smoothing circuit 56, and a DC amplifier 57. The electrode 19 of the tuning fork vibrator 10 is connected to the buffer circuit 52 while is connected to one end of the resistor R1. The electrode 23 is connected to the buffer circuit 53 while is connected to one end of the resistor R2. The other ends of the resistors R1 and R2 are connected to each other while are connected to the self-excited oscillating circuit 51, an output of which in turn is connected to the electrodes 20 and 22 of the tuning fork vibrator 10. The electrode 24 of the tuning fork vibrator 10, as mentioned above, is grounded. In addition, the self-excited oscillating circuit 51 includes an AGC (automatic gain control) circuit, a phase compensator, and a driving amplifier.

Outputs of the buffer circuits 52 and 53 are connected to the differential circuit 54, an output of which in turn is connected to the synchronous detection circuit 55, to which the self-excited oscillating circuit 51 is also connected. An output of the synchronous detection circuit 55 is connected to an output terminal 58 via the smoothing circuit 56 and the DC amplifier 57 in this order.

In the vibrating gyroscope 50 configured as described above, the tuning fork vibrator 10 generates a self-exciting vibration sequentially looping from the two legs 16 and 17 thereto via the electrodes 19 and 23, the resistors R1 and R2, the self-excited oscillating circuit 51, and the electrodes 20 and 22. This is called as a vibration by driving, a mode of which is that while one end of the two legs 16 and 17 is fixed to the base 14 as a node, the other ends are brought towards and away from each other. Accordingly, in this case, the electrodes 20 and 22 are driving electrodes while the electrodes 19 and 23 are feedback electrodes.

When an angular velocity about a rotational axis extending in the longitudinal direction of the two legs 16 and 17 is applied to the tuning fork vibrator 10 vibrating in such a manner, the two legs 16 and 17 bending-vibrate in the thickness direction by a Coriolis force. At this time, the legs 16 and 17 bend in directions opposite to each other. Therefore, the electrodes 19 and 23 generate signals in opposite phase to each other by the vibration due to the Coriolis force, in addition to signals in phase by the driving vibration.

Signals generated in the electrodes 19 and 23 are amplified in the buffer circuits 52 and 53, respectively, and then, only the signals in opposite phase to each other, i.e., the signals due to the Coriolis force are extracted in the differential circuit 54. The signals due to the Coriolis force are synchronously detected in the synchronous detection circuit 55; are smoothed in the smoothing circuit 56; and are amplified in the DC amplifier 57 so as to be produced therefrom. Therefore, the electrodes 19 and 23 serve as detection electrodes as well as feedback electrodes.

Since the vibrating gyroscope 50 uses the tuning fork vibrator 10 configured as described above, the vibration by driving of the vibrator 10 is stable, and the signal due to the Coriolis force produced from the vibrator 10 is also stable with small dispersion. Therefore, an angular velocity can be detected with high precision.

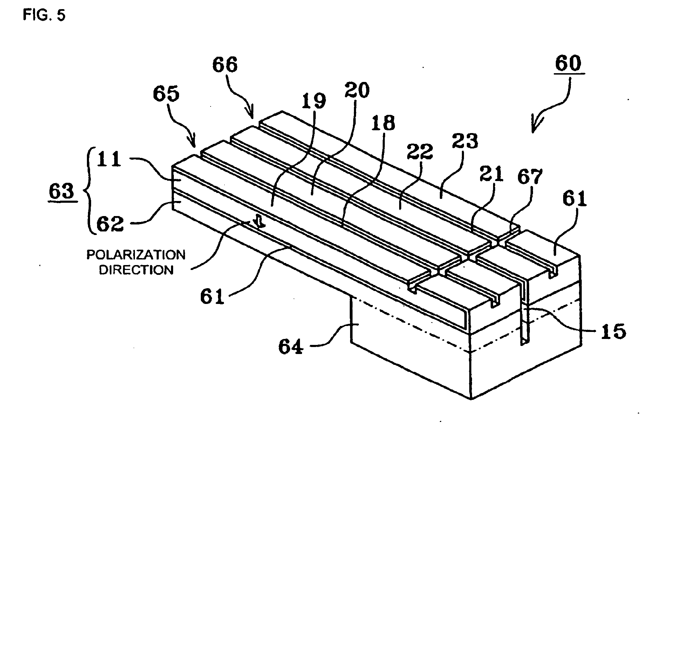

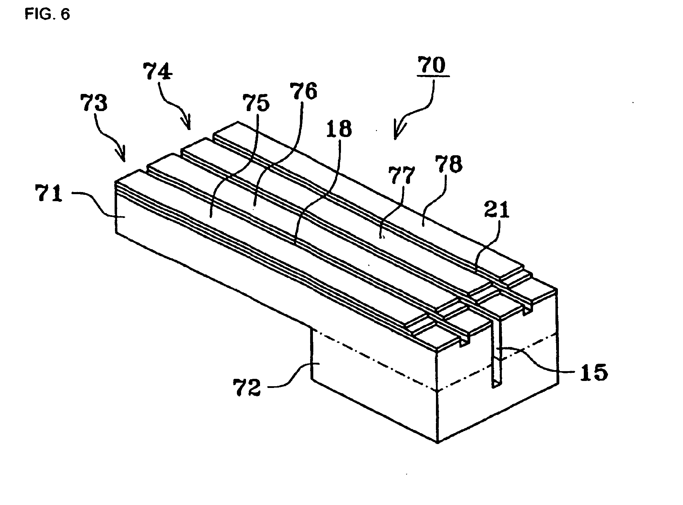

In the tuning fork vibrator 10, the two legs 16 and 17 have a bimorph structure; however, a tuning fork vibrator according to the present invention is not necessarily limited to that having legs with the bimorph structure. Tuning fork vibrators having other structures will be described with reference to Figs. 5 and 6.

Fig. 5 is a perspective view of a tuning fork vibrator according to another embodiment of the present invention. In Fig. 5, like reference characters designate like portions common to Figs. 1A and 1B, and the description thereof is omitted. Also, a drawing viewed from a different point like Fig. 1B is omitted.

Referring to Fig. 5, on the other principal surface of the piezoelectric substrate 11 in a tuning fork vibrator 60, an electrode 61 is formed. The electrode 61 extends toward one principal surface via an end-face of one end of the piezoelectric substrate 11. On the one principal surface of the piezoelectric substrate 11, the electrodes 19, 20, 22, and 23 are divided from the electrode 61 with a shallow slit 67 formed by a dicing saw in the width direction of the piezoelectric substrate 11. The reason of the electrode 61 extending toward the one principal surface of the piezoelectric substrate 11 is that the connection between each electrode and driving and detection circuits is enabled using wire bonding. Then, instead of the piezoelectric substrate 12 and the base 13 shown in Figs. 1A and 1B, there are provided a non-piezoelectric substrate 62 and a base 64 made of the same material as the substrate 62. The material of the non-piezoelectric substrate 62 and the base 64 is an insulating material. Among those elements, the piezoelectric substrate 11 and the non-piezoelectric substrate 62 are called together as a vibration unit 63, and one principal surface of the piezoelectric substrate 11 is to be one principal surface of the vibration unit 63 while the other principal surface of the non-piezoelectric substrate 62 is to be the other principal surface of the vibration unit 63.

The vibration unit 63 is divided into two legs 65 and 66 constituting a tuning fork by the slit 15 formed along the longitudinal direction symmetrically in the width direction. One principal surface and the other principal surface of the respective two legs 65 and 66 are the same as one principal surface and the other principal surface of the vibration unit 63, respectively. The slit 15 is structured not only to divide the vibration unit 63 but also to further cut off part of the base 64, when viewed from one principal surface of the vibration unit 63. As a result, the tuning fork vibrator 60 has a tuning fork structure having the two legs 65 and 66, each with one end fixed to the base 64 disposed on the other principal surface of the two legs 65 and 66. Thereby the two legs 65 and 66 have a unimorph structure of one piezoelectric member bonded to one non-piezoelectric element.

The tuning fork vibrator 60 configured as described above can be manufactured by the same method as for the tuning fork vibrator 10. However, it is necessary to form the part of the electrode 61 on the end-face of one end of the piezoelectric substrate 11 after cutting it off from a mother substrate. Then, if the electrode 61 is grounded in the same way as in the electrode 24 of the tuning fork vibrator 10, the tuning fork vibrator 60 can be driven in the same way as in the tuning fork vibrator 10, so that a vibrating gyroscope using the tuning fork vibrator 60 has the same advantages as those of the vibrating gyroscope 50.

In the tuning fork vibrator 60, the electrode 61 formed on the other principal surface of the piezoelectric substrate 11 is extended towards the one principal surface; alternatively, the electrode and the slit 67 formed on the end-face of one end of the piezoelectric substrate 11 are not necessarily needed because if a conductive metal or a semiconductor is used for a material of the non-piezoelectric substrate 62 and the base 64, the electrode 61 can be grounded via those materials. In this case, the manufacturing method of the tuning fork vibrator 60 can be brought nearer to that of the tuning fork vibrator 10. Alternatively, if there is provided a method for being conducted to the electrode 61 by some sort of method, this eliminates the need for extending the electrode 61 towards the one principal surface of the piezoelectric substrate 11 and also for having an electric conductor for the non-piezoelectric substrate 62 and the base 64.

Next, Fig. 6 shows a perspective view of a tuning fork vibrator according to still another embodiment of the present invention. In Fig. 6, like reference characters designate like portions common to Figs. 1A and 1B and the description thereof is omitted. Also, a drawing viewed from a different point like Fig. 1B is omitted.

Referring to Fig. 6, a tuning fork vibrator 70 is provided with one non-piezoelectric substrate 71 and a base 72 made of the same material as that of the substrate 71, instead of the piezoelectric substrates 11 and 12 and the base 14 shown in Figs. 1A and 1B. A material of the non-piezoelectric substrate 71 and the base 72 is an insulating material such as a silicon wafer and dielectric ceramic. Among them, the non-piezoelectric substrate 71 becomes a vibration unit as it is, so that it is called below as a vibration unit 71 using the same character.

On one principal surface of the non-piezoelectric substrate 71, four piezoelectric elements 75, 76, 77, and 78 divided by the slits 15, 18, and 21 are mounted. Each of the piezoelectric elements has a three-layered structure composed of a lower electrode mounted on the one principal surface of the non-piezoelectric substrate 71, a thin-film piezoelectric layer formed on the lower electrode by sputtering, and an upper electrode formed on the thin-film piezoelectric layer. In order to expose the lower electrode, the thin-film piezoelectric layer is formed to have an area smaller than the lower electrode. Also, in order to prevent short-circuit to the lower electrode, the upper electrode has an area smaller than the thin-film piezoelectric layer. As a material of the upper and lower electrodes, gold is used, for example. As a material of the thin-film piezoelectric layer, ZnO is used and it is polarized in the thickness direction.

The vibration unit 71 is divided into two legs 73 and 74 constituting a tuning fork by the slit 15 formed along the longitudinal direction symmetrically in the width direction. The slit 15 is structured not only to divide the vibration unit 71 but also to further cut off part of the base 72, when viewed from one principal surface of the vibration unit 71. As a result, the tuning fork vibrator 70 has a tuning fork structure having the two legs 73 and 74, each with one end fixed to the base 72 disposed on the other principal surface.

The tuning fork vibrator 70 configured as described above can be manufactured by substantially the same method as for the tuning fork vibrators 10 and 60. Then, if the lower electrodes of the four piezoelectric elements 75, 76, 77, and 78 are grounded in the same way as in the electrode 24 of the tuning fork vibrator 10, the tuning fork vibrator 70 can be driven in the same way as in the tuning fork vibrators 10 and 60, so that a vibrating gyroscope using the tuning fork vibrator 70 has the same advantages as those of the vibrating gyroscope 50.

The non-piezoelectric substrate 71 and the base 72 are not limited to insulating materials, and they may be electric conductors such as metals.

In the tuning fork vibrator 10, after the back-grinding, the electrode is mounted again on the other principal surface of the deletion part, and then, the first and second slits are formed, so that the chipping prevention is needed, such as the hardening the other principal surface of the deletion part with wax, as described above. Whereas in the tuning fork vibrators 60 and 70, after the back-grinding, it is not necessary to form the electrode again on the other principal surface of the deletion part. Therefore, there may also be a method for dividing a mother substrate into child substrates by finally back-grinding after the entire slits are formed on the mother substrate.

In this case, the second slit (the slit 37 shown in Figs. 3A and 3B, for example) for dividing a mother substrate into child substrates is formed with the small amount of non-deletion part remained so as not to reach the other principal surface, so that the mother substrate is prevented from being separated into child substrates after the entire slits are formed. Any forming order of the first slit and the second slit will do. When back-grinding, not only on the deletion part but also on the non-deletion part, the back-grinding is performed by a thickness corresponding to a remaining part, in which the second slit is not formed, so as to perfectly expose the second slit for dividing a mother substrate into child substrates. In this case, owing to a recent progress in the back-grinding technique, the back-grinding can be performed substantially without applying a load to the mother substrate and each child substrate, so that the chipping of the other principal surfaces of the deletion part and the non-deletion part can be prevented without the auxiliary process of hardening with wax used on demand in the manufacturing method shown in Figs. 2A to 3B.

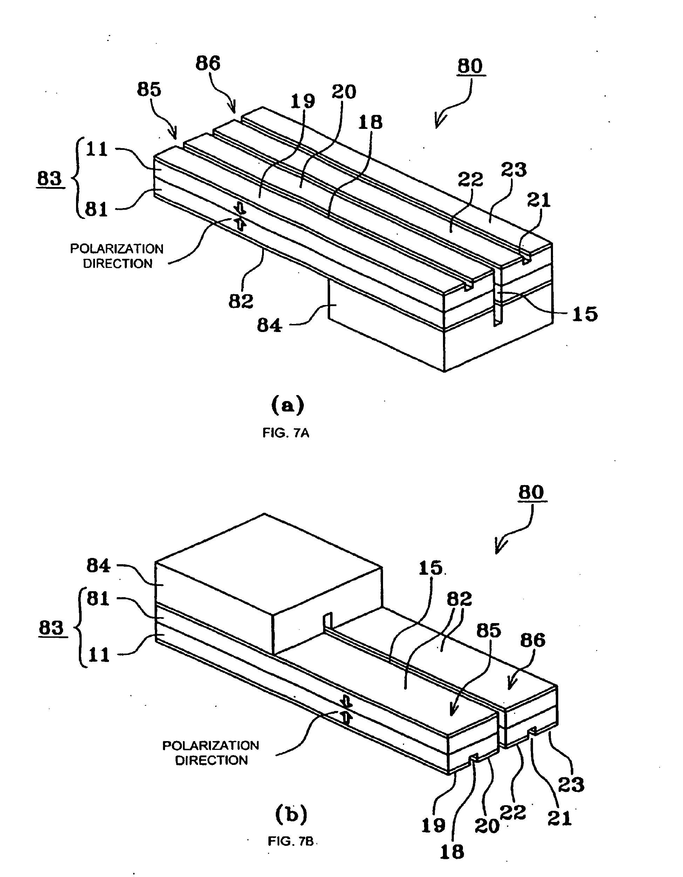

According to the embodiments described above, at least part of the vibration unit is made of the same material as that of the base; alternatively, the vibration unit and the base may be individually structured. A tuning fork vibrator according to another embodiment and a manufacturing method thereof will be described below with reference to Figs. 7A to 9B.

Figs. 7A and 7B are perspective views of a tuning fork vibrator according to still another embodiment of the present invention. Fig. 7A is opposite to Fig. 7B only in an observing point. In Figs. 7A and 7B, like reference characters designate like portions common to Figs. 1A and 1B, and the description thereof is omitted.

Referring to Figs. 7A and 7B, a tuning fork vibrator 80 is provided with a long piezoelectric substrate 81 polarized in a direction opposite to the piezoelectric substrates 11 and a base 84 made of a non-piezoelectric material, instead of the piezoelectric substrate 12 and the base 14 shown in Figs. 1A and 1B. One principal surface of the piezoelectric substrate 81 is bonded on the other principal surface of the piezoelectric substrate 11, and on the other principal surface of the piezoelectric substrate 81, an electrode 82 is formed. The base 84 is bonded on the other principal surface of the piezoelectric substrate 81 nearer to the other end. The material of the base 84 is an electric conductor such as a metal. Among them, the piezoelectric substrate 11 and the piezoelectric substrate 81 are called together as a vibration unit 83, and the one principal surface of the piezoelectric substrate 11 is to be one principal surface of the vibration unit 83 while the other principal surface of the piezoelectric substrate 81 is to be the other principal surface of the vibration unit 83. In addition, in the tuning fork vibrator 80, an electrode does not exist on the boundary between the piezoelectric substrates 11 and 81; alternatively an electrode may be disposed on the boundary.

The vibration unit 83 is divided into two legs 85 and 86 constituting a tuning fork by the slit 15 formed along the longitudinal direction symmetrically in the width direction. One principal surface and the other principal surface of the respective two legs 85 and 86 are the same as one principal surface and the other principal surface of the vibration unit 83, respectively. The slit 15 is structured not only to divide the vibration unit 83 but also to further cut off part of the base 84, when viewed from the one principal surface of the vibration unit 83. As a result, the tuning fork vibrator 80 has a tuning fork structure having the two legs 85 and 86, each with one end fixed to the base 84 disposed on the other principal surface thereof. The two legs 85 and 86 have a bimorph structure of two piezoelectric members bonded together in polarizing directions opposite to each other.

On one principal surface of the leg 85, the two electrodes 19 and 20 divided by the slit 18 are formed. Also, on one principal surface of the leg 86, the two electrodes 22 and 23 divided by the slit 21 are formed.

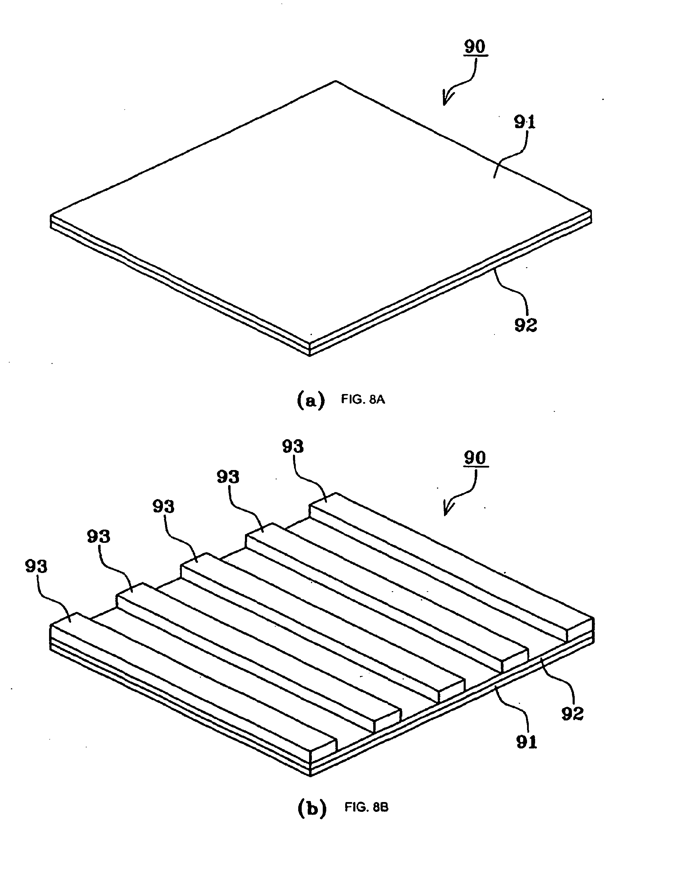

Next, a manufacturing method of the tuning fork vibrator 80 will be described with reference to Figs. 8A to 9A.

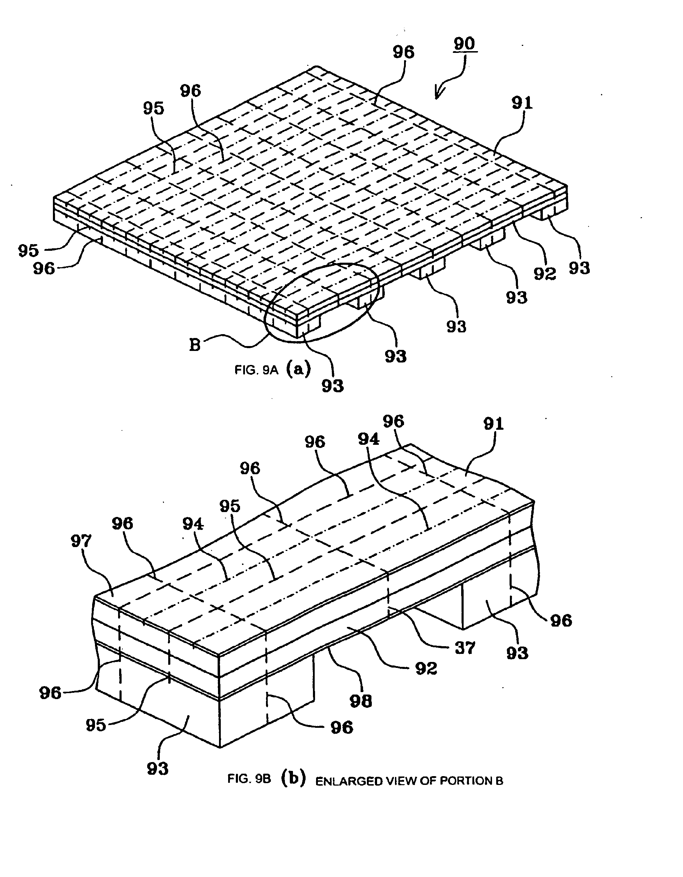

First, as shown in Fig. 8A, a mother substrate 90 is prepared, in which piezoelectric mother substrates 91 and 92 are bonded together so that one principal surface is to be the piezoelectric mother substrate 91 while the other principal surface is to be the piezoelectric mother substrate 92. The two piezoelectric mother substrates 91 and 92 are polarized in advance in thickness directions opposite to each other. Electrodes 97 and 98 (not shown in Figs. 8A and 8B but shown in Fig. 9B) are formed in advance on the entire of one and the other principal surfaces of the mother substrate 90, respectively.

Next, as shown in Fig. 8B, on the other principal surface of the mother substrate 90, i.e., the other principal surface of the piezoelectric mother substrate 92, long plate-like base members 93, each having the predetermined length, width, and thickness, are bonded and arranged in the width direction at predetermined intervals. The base member 93 is metallic.

Next, as shown in Figs. 9A and 9B, while the other principal surface of the mother substrate 90, i.e., the other principal surface of the base member 93 with a dicing tape bonded thereon is faced downward, slits 94, 95, and 96 are sequentially formed from the one principal surface of the mother substrate 90 with a dicing saw. The slits may be preferably formed in that order; however, the order is not limited to that. In addition, Fig. 9B is an enlarged view of a B portion of Fig. 9A.

Wherein, the slit 94 is formed along the width direction of the base member 93 so as to have a shallow groove on the one principal surface of the mother substrate 90. Thereby, the electrode 97 formed on the one principal surface of the piezoelectric substrate 91 is perfectly divided by the slit 94.

Also, the slit 95 is formed from one principal surface along the width direction of the base member 93 so as to have a depth enough to perfectly divide the mother substrate 90. Therefore, the groove depth of the slit 95 is larger than the thickness of the base member 93. This slit 95 represents a first slit.

The slit 96 is provided so as to perfectly divide not only the mother substrate 90 but also the base member 93 along the longitudinal and width directions of the base member 93. At this time, the slit 96 along the longitudinal direction of the base member 93 is arranged with exceptions so as to pass through the centerlines in the longitudinal direction of the base member 93 and a portion pinched by the base member 93. Thereby, the mother substrate 90, having part of the base member only at one end, is cut into child substrates, each being rectangular shaped in plan view (viewed from the one principal surface of the mother substrate 90) longitudinally in the width direction of the base member 93. This slit 96 represents a second slit.

In addition, when the slit 95 is formed with a dicing saw, since part of the other principal surface of the mother substrate 90, to which the base member 93 is not bonded, has not a dicing tape bonded thereon as in the other principal surface of the base member 93, there is a problem that the dicing is liable to produce chipping. Then, for preventing the chipping, part of the other principal surface of the mother substrate 90, to which the base member 93 is not bonded, may rather be preferably hardened with wax.

The child substrate made in such a manner is equivalent to the tuning fork vibrator 80 shown in Figs. 7A and 7B. Therefore, when Figs. 9A and 9B are compared to Figs. 7A and 7B, the slit 94 corresponds to the slits 18 and 21 while the slit 95 corresponds to the slit 15. The electrode 97 divided by the slits 94 to 96 corresponds to the electrodes 19, 20, 22, and 23 while the electrode 98 divided by the slit 96 corresponds to the electrode 82.

By manufacturing the tuning fork vibrator 80 by such a method, the two legs 85 and 86 can be formed by cutting from the one principal surface with a dicing saw in the state of the mother substrate 90. Therefore, it is not necessary to separate piezoelectric substrates after bonding a plurality of the piezoelectric substrates in the thickness direction as in the Conventional Example 1, when forming a slit between two legs, enabling the manufacturing process to be simplified.

The two legs 85 and 86 are formed with one dicing saw in one process. Therefore, the precision in size of the two legs 85 and 86 is highly improved, not producing a problem of the positional displacement between the legs and the fixing strength unbalanced with the base as in the Conventional Example 2. Furthermore, the four electrodes 19, 20, 22, and 23 are formed with one dicing saw in one process like in the two legs 85 and 86, so that the extremely high precision in size can be obtained. As a result, not only the dispersion in size between the legs of the tuning fork vibrator itself but also the dispersion in characteristics between plural tuning fork vibrators can be reduced.

The tuning fork vibrator 80 manufactured by such a method can be used for a vibrating gyroscope like in the tuning fork vibrators 10, 60, and 70 described above, so that a vibrating gyroscope using the tuning fork vibrator 80 has the same advantages as those of the vibrating gyroscope 50.

In the tuning fork vibrator 80, the base member 84 is a conductor such as a metal; however, it may also be an insulator with the same advantages as with the conductor. In this case, as for the conduction between the electrode 82 and the base, there may be a method of the conducting between one principal surface and the other principal surface of the base by forming an electrode on the substantial entire surface of the insulating base member, for example.

Also, in the tuning fork vibrator 80, the vibration unit 83 has a bimorph structure; alternatively, a tuning fork vibrator manufactured by such a method may also have a unimorph structure like the tuning fork vibrator 60, or a structure having a non-piezoelectric vibration unit having a piezoelectric element bonded to the side thereof like the tuning fork vibrator 70. Those cases also have the same advantages as those of the bimorph structure.

According to the embodiments described above, the width of the slit dividing the two legs is shown in the drawings so as to be the same as the width of the slit dividing the electrode into two. This is based on the assumption that the entire slits are formed with one dicing saw. However, the slit in width dividing the two legs may be larger than that dividing the electrode. If the width of the slit dividing the two legs is small, the vibration node position of the tuning fork vibrator becomes significantly critical and then, this can be alleviated by increasing the slit width. Therefore, the width of a fixing region for fixing the other principal surface of the base to the anchor block can be increased. This facilitates the vibration gyroscope using the tuning fork vibrator to be manufactured, meaning a simplified manufacturing process. To the contrary, if the fixing region can be remained small, the tuning fork vibration becomes difficult to be further restrained, meaning further reduction in the vibration leakage.

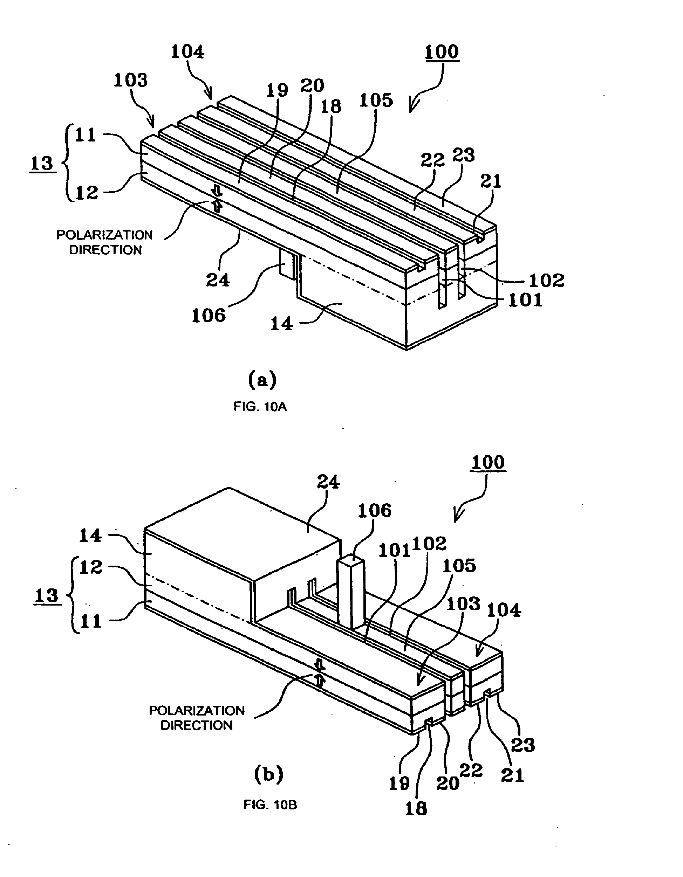

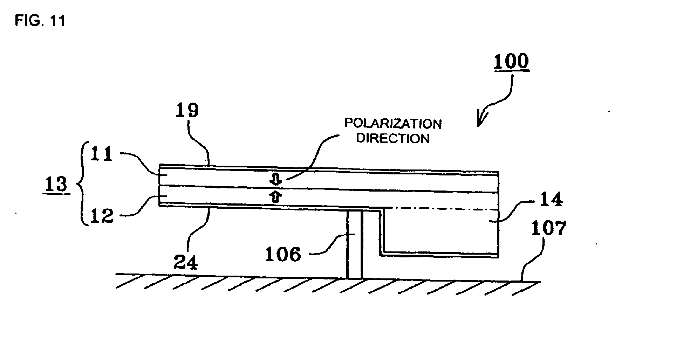

Figs. 10A and 10B show perspective views of a tuning fork vibrator according to still another embodiment of the present invention, and Fig. 11 is a side view thereof. In Figs. 10A to 11, like reference characters designate like portions common to Figs. 1A and 1B, and the description thereof is omitted.

While in the tuning fork vibrator 10 shown in Figs. 1A and 1B, the vibration unit 13 is divided into the two legs 16 and 17, in a tuning fork vibrator 100 shown in Figs. 10A and 10B, the vibration unit 13 is divided into three legs 103, 104, and 105 by two slits 101 and 102 formed along the longitudinal direction symmetrically in the width direction. The slits 101 and 102 are structured not only to divide the vibration unit 13 but also to further cut off part of the base 14, when viewed from the one principal surface of the vibration unit 13. Among them, the legs 103 and 104 constituting a tuning fork correspond to the legs 16 and 17 of the tuning fork vibrator 10, respectively. Since the width of the leg 105 is appropriately half of the leg 103 or 104 in width, the resonance frequency of the vibration in the width direction is different from that of the leg 103 or 104, i.e., the driving frequency of the tuning fork vibrator 100. Therefore, the leg 105 does not vibrate sympathetically with the vibration of the leg 103 or 104. Such a tuning fork vibrator 100 can be manufactured from a mother substrate by the same method as that of the tuning fork vibrator 10. In addition, the central leg 105 is made of a piezoelectric member, polarized in the thickness direction, and has electrodes formed on both surfaces because it is manufactured by the same method as that of the legs 103 and 104 on both sides; however, these are not necessarily needed.

At the substantial center of the other principal surface of the leg 105, one end of a support pin 106 extending in the direction perpendicular to the surface is fixed. The length of the support pin 106 is longer than the thickness of the base 14 and the other end, as shown in Fig. 11, is fixed to an anchor block 107. As a result, the tuning fork vibrator 100 is supported on the anchor block 107 with the support pin 106. In addition, different from the tuning fork vibrator 10, since the base 14 is floated in midair, there is no fixing region in the base 14.

In the tuning fork vibrator 100 structured in such a manner, since the resonance frequency of the leg 105 in the width direction is different from the driving frequency as described above, the leg 105 does not vibrate in the width direction. Therefore, the tuning fork vibrator 100 can be stably supported with the support pin 106. Moreover, since the base 14 is not fixed to the anchor block 107, the vibration is further difficult to be restrained in comparison with the tuning fork vibrator 10. In particular, when one end of the support pin 106 is fixed at the gravity center of the tuning fork vibrator 100, the fixing position becomes not only the gravity center of the vibration of the legs 103 and 104 in the width direction due to the driving but also the gravity center of the vibration in the thickness direction due to a Coriolis force, so that the vibration due to the Coriolis force is also difficult to be restrained, and this is also effective for restraining the reduction in detection sensitivity of a Coriolis force due to the vibration leakage.

Incidentally, since in the tuning fork vibrator 100, the thickness of the leg 105 is the same as that of the leg 103 or 104, the resonance frequency of the vibration of the leg 105 in the thickness direction substantially agrees with that of the leg 103 or 104. Because the legs 103 and 104 vibrate in the thickness direction by a Coriolis force, the leg 105 has possibilities of also vibrating sympathetically with these legs 103 and 104.

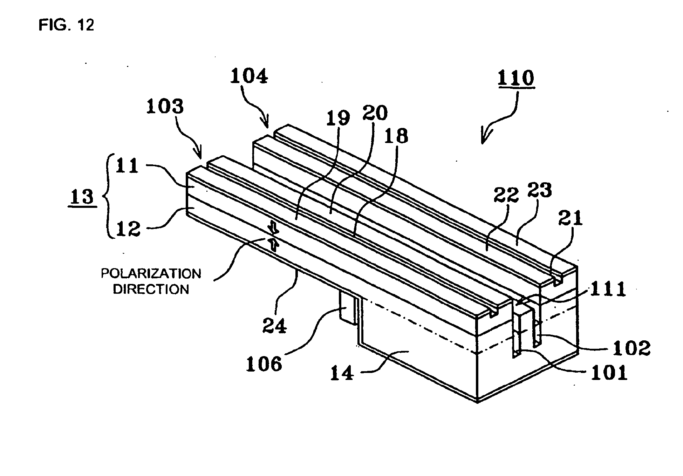

Then, in order to differentiate the resonance frequency of the vibration of the leg 105 in the thickness direction from that of the leg 103 or 104, it is conceivable that like a tuning fork vibrator 110 shown in Fig. 12, a central leg 111 be composed of only the piezoelectric substrate 12. In Fig. 12, like reference characters designate like portions common to Fig. 10. In this case, the leg 111 is different in width and thickness from the leg 103 or 104, so that the resonance frequencies in any of directions in width and thickness are different from those of the leg 103 or 104. As a result, the possibilities of the vibration of the leg 111 resonant with the vibration due to the driving of the leg 103 or 104 and a Coriolis force are reduced.

In the tuning fork vibrator 100 or 110, the number of legs is three; however, the number of legs may be four or more as long as a central leg for fixing the support pin exists. If considered of fixing a pin terminal, the number of legs may rather be preferably an odd number; in the case of an even number, if the support pin is fixed astride central two legs, for example, the structure is the same as that of an odd number legs.

The tuning fork vibrator 100 or 110 manufactured by such a method can be used for a vibrating gyroscope like in the tuning fork vibrators 10, 60, 70, and 80 described above, so that a vibrating gyroscope using the tuning fork vibrator 80 has the same advantages as those of the vibrating gyroscope 50.

In each tuning fork vibrator described above, it has been described that the vibrating gyroscope is constituted of the circuit shown in Fig. 4. However, it is conceivable that a driving circuit for a vibrating gyroscope of the tuning fork vibrator according to the present invention have another configuration.

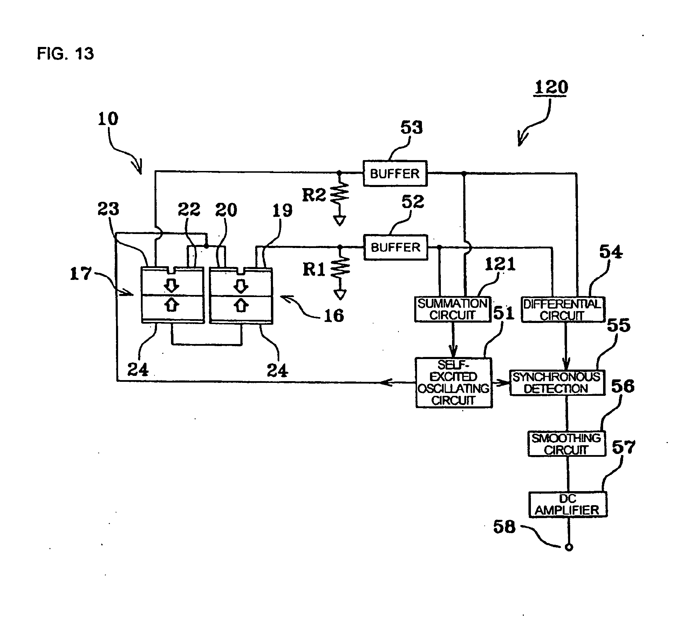

Fig. 13 is a circuit diagram of a vibrating gyroscope according to another embodiment of the present invention. In Fig. 13, like reference characters designate like portions common to Fig. 4, and the description thereof is omitted.

In a vibrating gyroscope 120 shown in Fig. 13, although the electrodes 24 of the tuning fork vibrator 10 are connected together between the two legs 16 and 17, the electrodes 24 are floated without being connected to any place other than the above. The other end of the resistors R1 and R2 is grounded. The outputs of the buffer circuits 52 and 53 are connected to a summation circuit 121 together, and the output of the summation circuit 121 is connected to the self-excited oscillating circuit 51.

In the vibrating gyroscope 120 configured in such a manner, the tuning fork vibrator 10 generates a self-exciting vibration sequentially looping from the two legs 16 and 17 thereto via the electrodes 19 and 23, the buffer circuits 52 and 53, the summation circuit 121, the self-excited oscillating circuit 51, and the electrodes 20 and 22. This is called as a vibration by driving, a mode of which is that while one end of the two legs 16 and 17 is fixed to the base 14 as a node, the other ends are brought towards and away from each other. Then, in the same way as in the vibrating gyroscope 50, the vibrating gyroscope 120 can detect a Coriolis force to be produced.

In the vibrating gyroscope 120, electrodes requiring wiring in the tuning fork vibrator 10 are only the electrodes 19, 20, 22, and 23 on the one principal surface of the respective legs 16 and 17, and the electrodes 24 on the other principal surfaces of the legs 16 and 17 need not be wired. Therefore, the vibrating gyroscope 120 has advantages that a vibrating gyroscope can be easily manufactured.

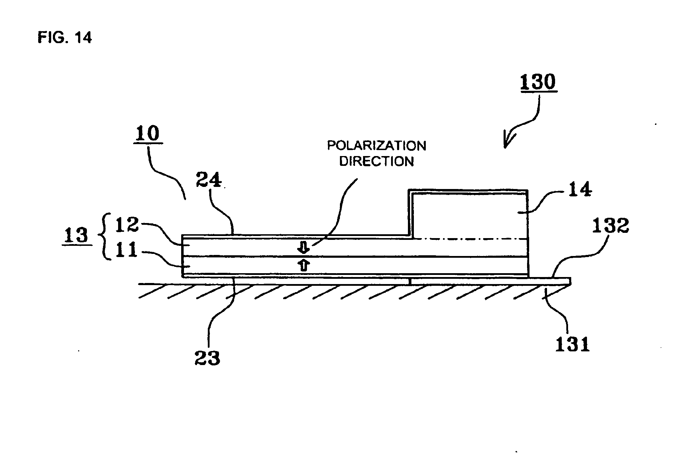

Incidentally, in the vibrating gyroscope 120, the floated state of the electrodes 24 of the tuning fork vibrator 10 means that the entire electrodes to be connected to circuits exist only on the one principal surface of the tuning fork vibrator 10. Therefore, it is conceivable that arrangement of the vibrating gyroscope using the tuning fork vibrator 10 also be a configuration shown in Fig. 14.

In a vibrating gyroscope 130 shown in Fig. 14, the tuning fork vibrator 10 is arranged with one principal surface of a vibration unit being faced downward so as to fix the electrodes 19, 20, 22, and 23 at one end of the one principal surface using solder or a conductive adhesive to connection electrodes 132 on a mounting substrate 131 having a driving detection circuit (not shown) formed thereon. The connection electrodes 132 exist only under the one end of the vibration unit of the tuning fork vibrator 10 while do not exist under the portion formed from the center in the longitudinal direction to the other end. In addition, the respective connection electrodes 132 exist corresponding to the electrodes 19, 20, 22, and 23 of the tuning fork vibrator 10. Since the connection electrode 132 has a thickness of about 30 µm, the other end of the vibration unit is floated from the surface of the mounting substrate 131.

In the vibrating gyroscope 130, only the one end of the vibration unit is fixed to the mounting substrate 131 while the other end is floated, in such a manner, so that the operation as a tuning fork is not hindered. Moreover, since the electrode 23 on the one principal surface of the vibration unit can be connected to the connection electrodes 132 so that the electrode 24 on the other principal surface of the vibration unit need not be connected, the wiring in midair is not necessary, enabling the vibrating gyroscope 130 to be easily manufactured.

In the vibrating gyroscope 130, although the base 14 of the tuning fork vibrator 10 has a function of fixing the two legs 16 and 17 to each other while becoming a node of the vibration, the base 14 has not a function of fixing the tuning fork vibrator 10 to the anchor block.

In the vibrating gyroscope 130, the tuning fork vibrator 10 is used; alternatively, the tuning fork vibrators 60, 70, and 80 may be also used. Moreover, as long as a tuning fork vibrator has a cross-section of legs shown in Fig. 4, it is not necessarily limited to the tuning fork vibrator according to the present invention. That is, although the tuning fork vibrator is to be shown in the Conventional Example 1 or 2, as long as an electrode on one principal surface of the respective legs is divided into two in the width direction while one electrode exists on each of the other principal surfaces, wherein the electrodes on the other principal surfaces are connected together while being connected to a reference voltage or floated, the tuning fork vibrator can perform the driving and detection with the same circuit wiring.

In the vibrating gyroscope 120, the electrode 24 is floated; however, the electrode 24 is not necessarily floated but it may be connected to a reference voltage (i.e., grounded) although there are problems of the reduction in detection sensitivity of a Coriolis force and the necessity of midair wiring.

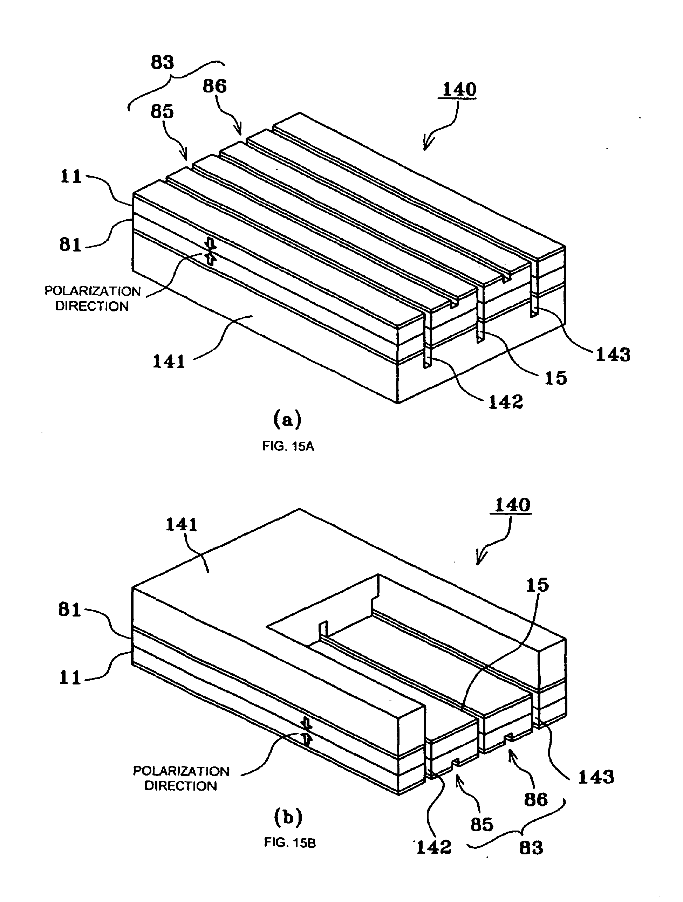

Figs. 15A and 15B are perspective views of a tuning fork vibrator according to still another embodiment of the present invention. Fig. 15A is opposite to Fig. 15B only in an observing point. In Figs. 15A and 15B, like reference characters designate like portions common to Figs. 7A and 7B, and the description thereof is omitted.

In a tuning fork vibrator 140 shown in Figs. 15A and 15B, the structure of the vibration unit 83 comprising the two legs 85 and 86 constituting a tuning fork is completely the same as that of the tuning fork vibrator 80 shown in Figs. 7A and 7B, and only a base is different. Then, in Figs. 15A and 15B, reference characters for details of the vibration unit 83 are omitted.

In the vibrating gyroscope 140, a base 141 is produced so as to have a substantial U-shape composed of three straight line-segments being connected to each other at a right angle, and one principal surface of the central straight line-segment is bonded to one end of the other principal surface of the vibration unit 83. On one principal surface of the respective other two straight line-segments in parallel to each other, the two piezoelectric substrates 11 and 81, which are the same as those constituting the vibration unit 83, are bonded. Therefore, the base 141 is surrounding the vibration unit 83 comprising the two legs 85 and 86 from three directions, which are one end direction and both width directions. As a result, between the piezoelectric substrates 11 and 81 bonded to the two straight line-segments in parallel to each other of the base 141 and the two legs 85 and 86, slits 142 and 143 exist along the longitudinal direction of the vibration unit 83, respectively. The slits 142 and 143, as will be described later, separate the two piezoelectric substrates 11 and 81 completely, like the slit 15 between the two legs 85 and 86, and are also formed to further cut off part of the base 141. Thereby, the vibration unit 83 is separated from other part of the piezoelectric substrates 11 and 81.

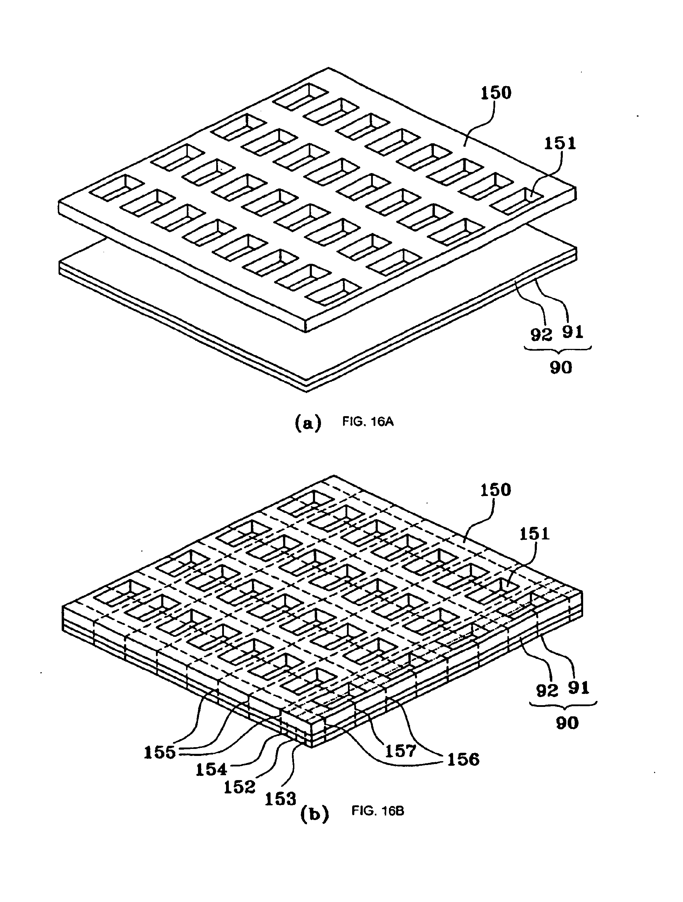

Then, a manufacturing method of the tuning fork vibrator 140 will be described with reference to Figs. 16A and 16B. In Figs. 16A and 16B, like reference characters designate like portions common to Figs. 8A and 8B, which illustrate a manufacturing method of the tuning fork vibrator 80, and the description thereof is omitted.

First, as shown in Fig. 16A, a mother substrate 90 is prepared by bonding piezoelectric mother substrates 91 and 92 together so that one principal surface is to be the piezoelectric mother substrate 91 while the other principal surface is to be the piezoelectric mother substrate 92. Simultaneously, a base mother substrate 150 is prepared, having a plurality of through-holes 151 being rectangular in plan view and formed lengthwise and crosswise. In the base mother substrate 150 shown in Figs. 16A and 16B, through-holes 151 of 8 x 4 = 32 are formed. The through-hole 151 may be formed from any surface of the base mother substrate 150, and by any method.

Then, as shown in Fig. 16B, on the other principal surface of the mother substrate 90, i.e., on the piezoelectric mother substrate 92, one principal surface of the base mother substrate 150 is bonded.

Next, while the other principal surface of the base mother substrate 150 with a dicing tape bonded thereon is faced downward, three slits 152, 153, and 154 are formed with a dicing saw in parallel to each other from one principal surface of the mother substrate 90. Any of the slits 152, 153, and 154 cuts off the mother substrate 90 completely along the longitudinal direction of the rectangular through-holes 151 while cutting a small part of the base mother substrate 150 in depth. The slit 152 passes through the substantial center of the through-holes 151 in plan view along the longitudinal direction thereof while each of the slits 153 and 154 passes through a line corresponding to an inner wall of the through-hole 151 on both sides of the slit 152. However, it is not essential to pass through the line corresponding to the inner wall and the slits 153 and 154 may pass through inside the line. That is, the slits 153 and 154 are sufficient to pass through within the through-holes 151 in plan view. In addition, the space between the slits 152 and 153 is the same as that between the slits 152 and 154. In Fig. 16B, although only the slits 152, 153, and 154 passing through the partial through-holes 151 are illustrated for brevity, the same slits are formed for the entire through-holes in practice. Two prismatic parts formed in the mother substrate 90 by the slits 152, 153, and 154 will become two legs constituting a tuning fork by work thereafter. These slits 152, 153, and 154 are called as a first slit.

Although illustration is omitted, before or after the formation of the slits 152, 153, and 154, slits are also formed in intermediate portions between the slits 152 and 153 and between the slits 152 and 154 along the longitudinal direction of the through-holes 151 so as to have a depth to cut the electrode formed on the one principal surface of the piezoelectric mother substrate 91. These slits correspond to the slits 18 and 21 for dividing the electrode for driving and detection in the tuning fork vibrator 80.

Next, from the one principal surface of the mother substrate 90, slits 155, 156, and 157 are formed with a dicing saw. The slit 155 is formed along the longitudinal direction of the through-holes 151 so as to cut off not only the mother substrate 90 but also the base mother substrate 150. At this time, the slit 155 passes through just an intermediate course between the two through-holes 151 in plan view. The slit 156 is formed along the width direction of the through-holes 151 so as to cut off not only the mother substrate 90 but also the base mother substrate 150. At this time, the slit 156 passes through just an intermediate course between the two through-holes 151 in plan view. Therefore, within the rectangular shape in plan view cut by the slits 155 and 156, the through-hole 151 is completely included. The slit 157 passes through the center in plan view of the through-hole 151. Therefore, the two prismatic parts, formed on the mother substrate 90 by the slits 152, 153, and 154 in the front-end step, are cut by the slits 156 and 157 so as to have two legs constituting a tuning fork. Child substrates cut by the slits 155, 156, and 157 become the tuning fork vibrator 140. In Figs. 16A and 16B, the number of the child substrates is 64. These slits 155, 156, and 157 are called as a second slit.

When the slits 152, 153, and 154 are formed with a dicing saw, since part of the other principal surface of the mother substrate 90, to which the base mother substrate 150 is not bonded, has not a dicing tape bonded thereon, there is a problem that the dicing is liable to produce chipping. Then, for preventing the chipping, part of the other principal surface of the mother substrate 90, to which the base mother substrate 150 is not bonded, may rather be preferably hardened with wax.

In the manufacturing method of the tuning fork vibrator 140 described above, the base mother substrate 150 having a plurality of through-holes 151 formed lengthwise and crosswise thereon is used. Since it is a principal object of the through-hole to have a space for enabling legs of a tuning fork to vibrate, the hole is not necessarily a through-hole. As long as there is a space in the vicinity of the legs of the tuning fork, a rectangular unpierced recess having a predetermined depth may also be used, for example. In this case, the surface of the base mother substrate having the recess formed thereon is bonded to the mother substrate.

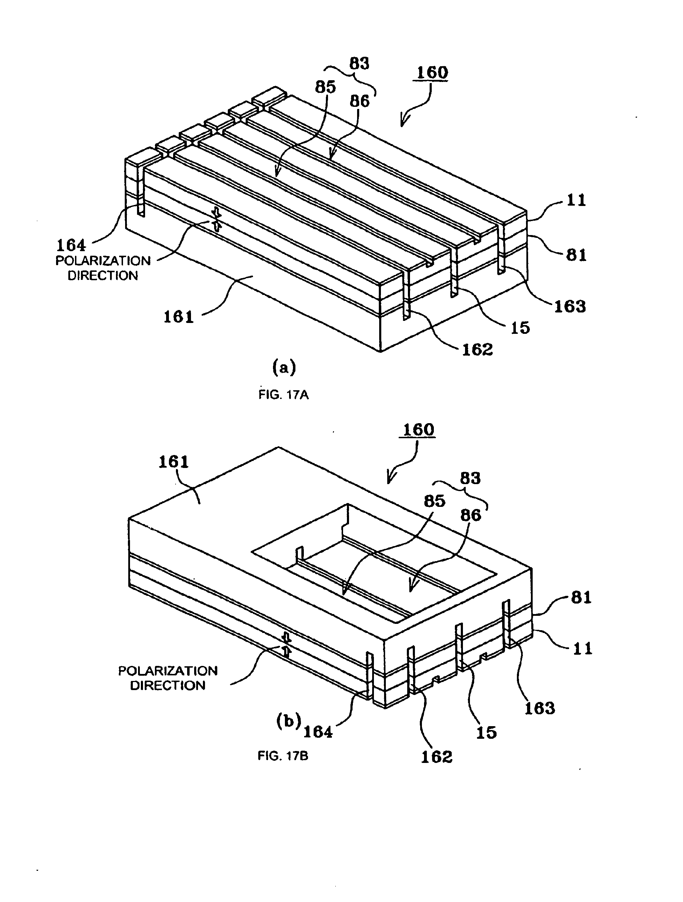

Figs. 17A and 17B are perspective views of a tuning fork vibrator according to still another embodiment of the present invention similar to the tuning fork vibrator 140 shown in Figs. 15A and 15B. Fig. 17A is opposite to Fig. 17B only in an observing point. In Figs. 17A and 17B, like reference characters designate like portions common to Figs. 15A and 15B, and the description thereof is omitted.

In a tuning fork vibrator 160 shown in Figs. 17A and 17B, the structure of the vibration unit 83 comprising the two legs 85 and 86 constituting a tuning fork is completely the same as that of the tuning fork vibrator 80 shown in Figs. 7A and 7B, and only a base is different. Then, in Figs. 17A and 17B, reference characters for details of the vibration unit 83 are omitted.

In the tuning fork vibrator 160, a base 161 is produced so as to have a rectangular frame longer in the longitudinal direction of the vibration unit 83 composed of four straight line-segments, and one principal surface of one line-segment along the width direction is bonded to one end of the other principal surface of the vibration unit 83. On one principal surface of the respective other three straight line-segments of the base 161, the two piezoelectric substrates 11 and 81, which are the same as those constituting the vibration unit 83, are bonded. Therefore, the base 161 is surrounding the vibration unit 83 comprising the two legs 85 and 86 from four directions, which are both end directions and both width directions. As a result, between the piezoelectric substrates 11 and 81, bonded to three straight line-segments other than one straight line-segment bonded to the vibration unit 83, and the two legs 85 and 86, slits 162, 163, and 164 exist, respectively. The slits 162 and 163 are formed along the longitudinal direction of the vibration unit 83 while the slit 164 is formed along the width direction of the vibration unit 83. The slits 162, 163, and 164, as will be described later, separate the two piezoelectric substrates 11 and 81 completely, like the slit 15 between the two legs 85 and 86, and are also formed to further cut off part of the base 141. Thereby, the vibration unit 83 is separated from other part of the piezoelectric substrates 11 and 81.

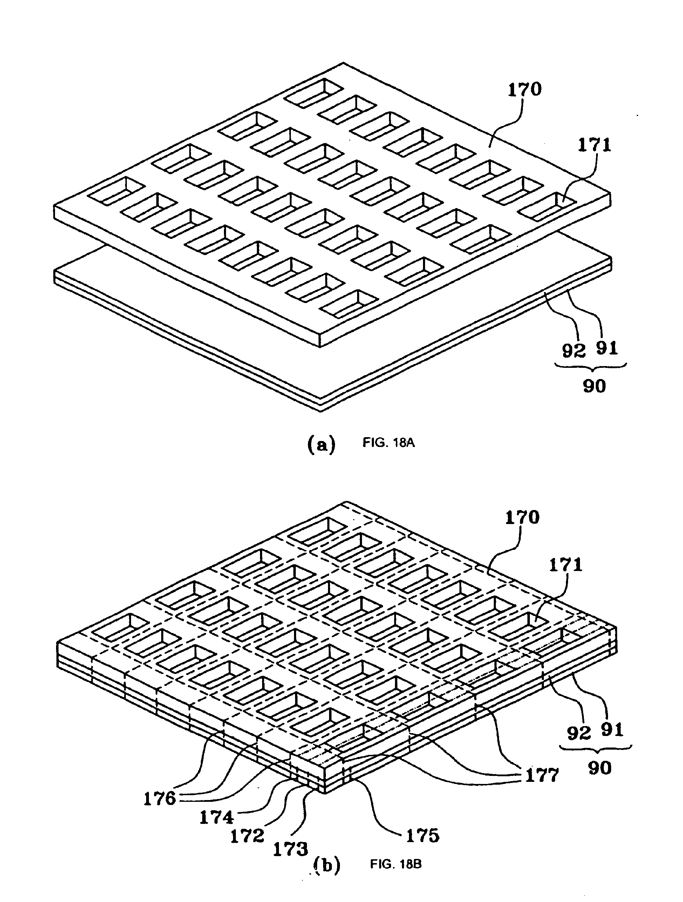

Then, a manufacturing method of such a tuning fork vibrator 160 will be described with reference to Figs. 18A and 18B. In Figs. 18A and 18B, like reference characters designate like portions common to Figs. 8A and 8B, which illustrate a manufacturing method of the tuning fork vibrator 80, and the description thereof is omitted.

First, as shown in Fig. 18A, the mother substrate 90 is prepared by bonding the piezoelectric mother substrates 91 and 92 together so that one principal surface is to be the piezoelectric mother substrate 91 while the other principal surface is to be the piezoelectric mother substrate 92. Simultaneously, a base mother substrate 170 is prepared, having a plurality of through-holes 171 being rectangular in plan view and formed lengthwise and crosswise. In the base mother substrate 170 shown in Figs. 18A and 18B, through-holes 171 of 8 4=32 are formed.

Then, as shown in Fig. 18B, on the other principal surface of the mother substrate 90, i.e., on the piezoelectric mother substrate 92, one principal surface of the base mother substrate 170 is bonded. The through-hole 171 may be formed from any surface of the base mother substrate 170, and by any method.

Next, while the other principal surface of the base mother substrate 170 with a dicing tape bonded thereon is faced downward, slits 172, 173, 174, and 175 are formed with a dicing saw from one principal surface of the mother substrate 90. Any of the three slits 172, 173, and 174 in parallel to each other cuts off the mother substrate 90 completely along the longitudinal direction of the rectangular through-holes 171 while cutting a small part of the base mother substrate 170 in depth. The slit 172 passes through the substantial center of the through-holes 171 in plan view along the longitudinal direction thereof while each of the slits 173 and 174 passes through a line corresponding to an inner wall of the through-hole 171 on both sides of the slit 172. However, it is not essential to pass through the line corresponding to the inner wall and the slits 173 and 174 may pass through inside the line. That is, the slits 173 and 174 are sufficient to pass through within the through-holes 171 in plan view. The slit 175 cuts off the mother substrate 90 completely along the width direction of the rectangular through-hole 171 while cutting a small part of the base mother substrate 170 in depth. The slit 175 passes through a line corresponding to an inner wall of the through-hole 171. However, it is not essential to pass through the line corresponding to the inner wall and the slit 175 may pass through inside the line. That is, the slit 175 may pass through inside the through-hole 171 in plan view. In addition, in Fig. 18B, although only the slits 172, 173, 174, and 175 passing through the partial through-holes 171 are illustrated for brevity, the same slits are formed for the entire through-holes in practice. Two prismatic parts formed in the mother substrate 90 by the four slits 172, 173, 174, and 175 will become two legs constituting a tuning fork. These slits 172, 173, 174, and 175 are called as a first slit.

Although illustration is omitted, before or after the formation of the slits 172, 173, 174, and 175, slits are also formed in intermediate portions between the slits 172 and 173 and between the slits 172 and 174 along the longitudinal direction of the through-holes 171 so as to have a depth to cut the electrode formed on the one principal surface of the piezoelectric mother substrate 91. These slits correspond to the slits 18 and 21 for dividing the electrode for driving and detection in the tuning fork vibrator 80.

Next, from the one principal surface of the same mother substrate 90, slits 176 and 177 are formed with a dicing saw. The slit 176 is formed along the longitudinal direction of the through-holes 171 so as to cut off not only the mother substrate 90 but also the base mother substrate 170. At this time, the slit 176 passes through just an intermediate course between the two through-holes 171. The slit 177 is formed along the width direction of the through-holes 171 so as to cut off not only the mother substrate 90 but also the base mother substrate 170. At this time, the slit 177 passes along an intermediate course closer to the slit 175 between the two through-holes 171. Therefore, within the rectangular shape in plan view cut by the slits 176 and 177, the through-hole 161 is completely included. Child substrates cut by these slits 176 and 177 will become the tuning fork vibrator 160. In Figs. 18A and 18B, the number of the child substrates is 32. These slits 176 and 177 are called as a second slit.

When the slits 172, 173, 174, and 175 are formed with a dicing saw, since part of the other principal surface of the mother substrate 90, to which the base mother substrate 170 is not bonded, has not a dicing tape bonded thereon, there is a problem that the dicing is liable to produce chipping. Then, for preventing the chipping, part of the other principal surface of the mother substrate 90, to which the base mother substrate 170 is not bonded, may rather be preferably hardened with wax.

In the manufacturing method of the tuning fork vibrator 160 described above, the base mother substrate 170 having a plurality of through-holes 171 formed lengthwise and crosswise thereon is used. Since it is a principal object of the through-hole to have a space for enabling legs of a tuning fork to vibrate, the hole is not necessarily a through-hole. As long as there is a space in the vicinity of the legs of the tuning fork, a rectangular unpierced recess having a predetermined depth may also be used, for example. In this case, the surface of the base mother substrate having the recess formed thereon is bonded to the mother substrate.

In the tuning fork vibrators 140 and 160, the vibration unit 83 has a bimorph structure formed by sandwiching two piezoelectric members; the vibration unit is not limited to the bimorph structure, and a tuning fork vibrator may also have a unimorph structure like the tuning fork vibrator 10 shown in Figs. 1A and 1B, or a structure having a non-piezoelectric vibration unit having a piezoelectric element formed or bonded to the surface thereof like the tuning fork vibrator 70 shown in Fig. 6.

As for three slits in parallel to each other in the first slits, four or more slits may be used for obtaining a vibration unit like in the tuning fork vibrator 100 shown in Figs. 10A and 10B.

The manufacturing method of the tuning fork vibrators 140 and 160 has been described as that the base mother substrate having the through-holes or the recesses formed in advance is bonded to the mother substrate constituting the vibration unit. However, a method for providing a space for enabling legs of a tuning fork to vibrate is not limited to this method. For example, after bonding the base mother substrate without the through-holes to the mother substrate, the through-holes may be formed by sand blasting or etching. In the case where the through-holes are formed afterward in such a manner, it is not necessary to independently form the base mother substrate and the mother substrate, so that the base mother substrate may be made integrally with part or the entire of the mother substrate. In this case, even having the base like in the tuning fork vibrator 140 or 160, a tuning fork vibrator in which at least part of the vibration unit is integrated with the base may be structured like the tuning fork vibrators 10, 60, and 70 shown in Figs. 1A and 1B, and Figs. 5, and 6.

Even in the tuning fork vibrators 140 and 160 structured in such a manner, they are the same as the tuning fork vibrator 80 shown in Figs. 7A and 7B except for the structure of the base 141 or 161. Then, description of the driving method and detection method of a Coriolis force is omitted and the difference point due to the difference in the base will be definitely described below by exemplifying the tuning fork vibrator 160.

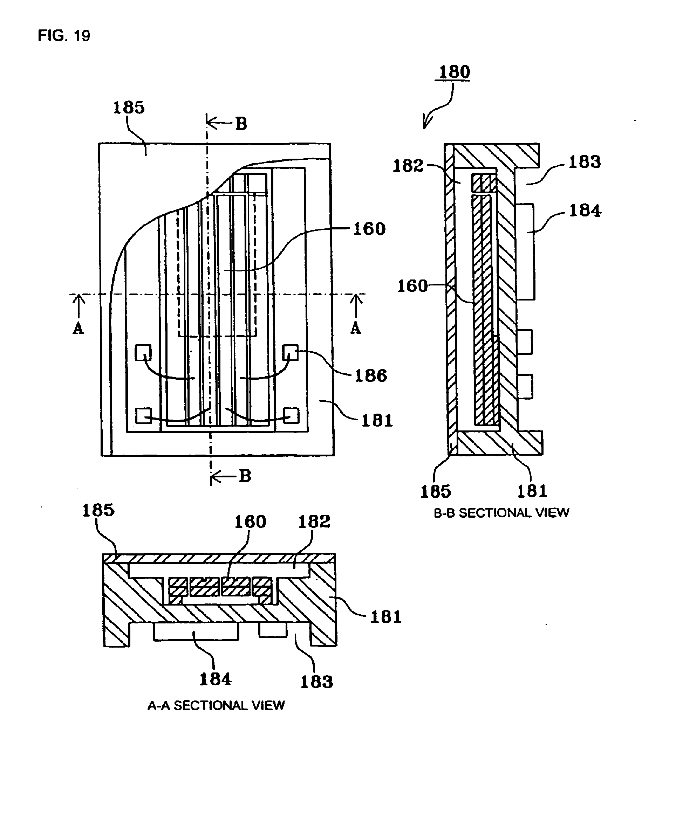

First, Fig. 19 includes a plan view of a vibrating gyroscope using the tuning fork vibrator 160 according to an embodiment, a sectional view at the line A-A, and a sectional view at the line B-B. In the sectional views at the line A-A and the line B-B, only the sect ional parts are shown.

Referring to Fig. 19, a vibrating gyroscope 180 comprises a case 181, the tuning fork vibrator 160, circuit parts 184, and a cover 185.

The case 181 is made of an insulating material and has recesses 182 and 183 formed on one principal surface and the other principal surface, respectively. The recess 182 having two-stage depths is provided with the tuning folk vibrator 160 mounted on a planar bottom surface of the recess 182. The substantial entire other principal surface of the tuning folk vibrator 160 is bonded on the bottom of the recess 182. On the sublevel of the recess 182, four electrodes 186 are mounted, which are connected to four electrodes placed on two legs of the tuning folk vibrator 160 via wires. Furthermore, on one principal surface of the recess 182, the cover 185 for covering the tuning folk vibrator 160 is attached.

The recess 183 structured on the other principal surface of the case 181 is provided with a circuit wiring (not shown) mounted on the planar bottom. On the circuit wiring, the circuit parts 184 constituting circuits for driving the tuning fork vibrator and detecting a Coriolis force are mounted. To the circuit wiring, the electrodes 186 mounted on the sublevel of the recess 182 are also connected via wires passing through inside the case 181.

In the vibrating gyroscope 180 structured in such a manner, as described above, the substantial entire other principal surface of the base 161 in the tuning fork vibrator 160 is bonded on the bottom of the recess 182 of the case 181. This is different from the tuning fork vibrator 10 shown in Fig. 1, which is fixed with the fixing region 25 on the central other surface of the base 14. When the tuning fork vibrator 160 is mounted in such a manner, although the function not to restrict the vibration of the tuning fork like in the tuning fork vibrator 10 is reduced, since the fixing region is surrounding the vibration part, the vibrator is stabilized more than the case of the fixing only with the central portion, enabling fluctuations in detecting a Coriolis force to be reduced.

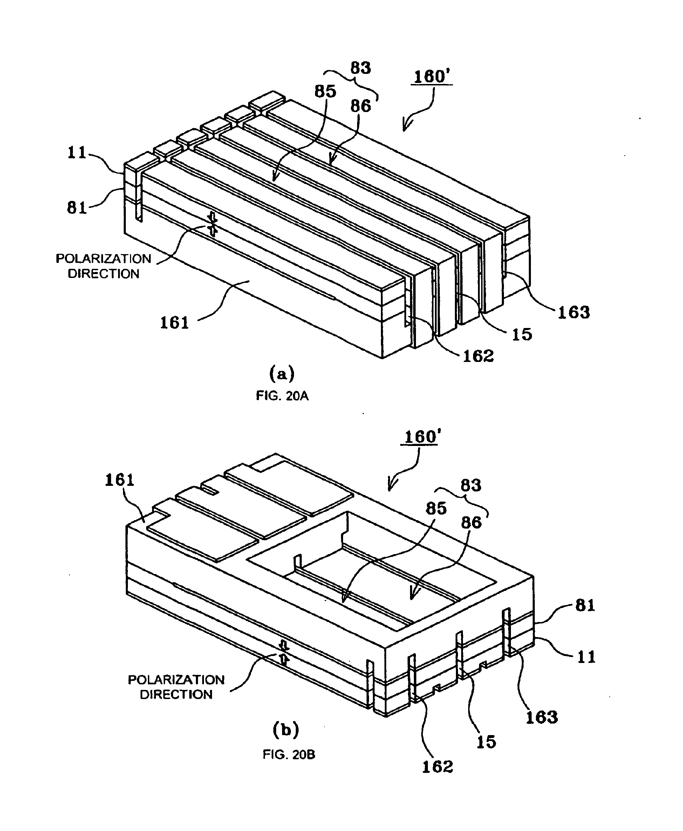

Incidentally, in the vibrating gyroscope 180, wires are used for wiring between the electrodes of the tuning fork vibrator 160 and the electrodes 186. The wiring with a wire may produce the instability in connection and also the increase in the number of man-hours in the manufacturing process. Then, an example of a tuning fork vibrator structure reducing these disadvantages is show in Figs. 20A and 20B.

Referring to Figs. 20A and 20B, in the tuning fork vibrator 160', the four electrodes formed on one principal surface of the vibration unit 83 (83' in the tuning fork vibrator 160') in the tuning fork vibrator 160 shown in Figs. 17A and 17B are extended to the other principal surface of the base 161 from the side-face at one end of the vibration unit 83 via a side-face of the base 161. The two electrodes inside of the four electrodes are collected into one on the other principal surface of the base 161. In addition, electrodes existing in the boundary between the vibration unit 83 and the base 161 are avoided from reaching the side-face so that electrodes on the side-face of the vibration unit 83 do not short-circuit with the electrodes in the boundary.

When the tuning fork vibrator 160' structured in such a manner is mounted on the case 181 shown in Fig. 19, if an electrode is formed on the bottom of the recess 182 in advance and then this electrode is fixed to the electrode on the other principal surface of the base 161 with a conductive adhesive, for example, the fixing and wiring of the tuning fork vibrator 160' can be simultaneously performed, eliminating wires for the wiring. As a result, instability factors such as breaking of wire are reduced, enabling the number of man-hours in the manufacturing process to be simultaneously reduced.

Such a deformation extending the electrode for driving the tuning fork vibrator or detecting a Coriolis force to the other principal surface of the base via a side-face of the vibration unit or the base is not limited to the structure of the tuning fork vibrator 160; it is basically applicable to the tuning fork vibrator according to any of the embodiments described above.

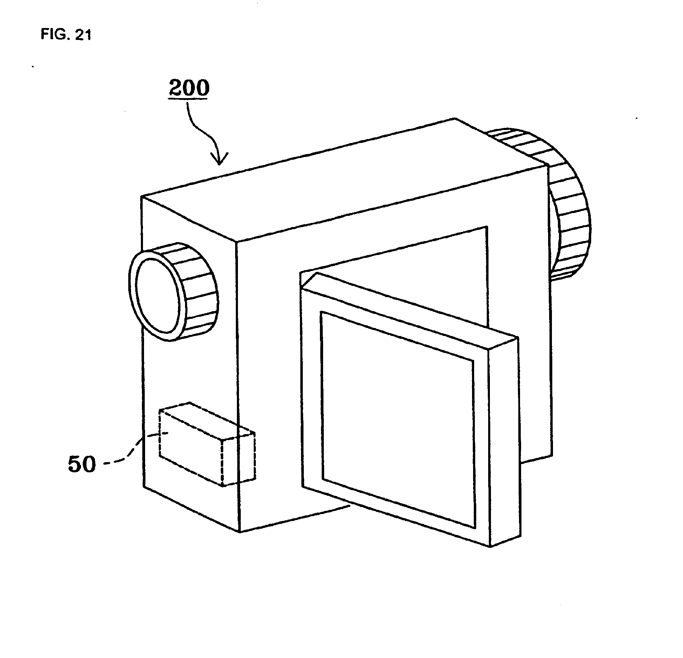

Fig. 21 is a perspective view of a video camera, which is an embodiment of an electronic apparatus according to the present invention. In Fig. 21, a video camera 200 comprises the vibrating gyroscope 50 for correcting an error due to hand movements during operation.

In the video camera 200 configured in such a manner, precise angular velocity information can be consistently obtained because of the vibrating gyroscope according to the present invention, so that the performance can be improved by achieving the precise hand-movements correction.

An electronic apparatus according to the present invention is not limited to the video camera, and various electronic apparatuses using a vibrating gyroscope are incorporated, such as a digital camera using a vibrating gyroscope for the same hand-movements correction, a navigation system using it for positional detection, and a rolling detection system of an automobile.

## Claims

1. A vibrating gyroscope (50; 120; 180) comprising a tuning fork vibrator (10; 80; 100; 110; 140; 160) having two long legs (16, 17; 85, 86; 103, 104) formed by bonding piezoelectric members (11, 12; 81) polarized opposite to each other in a direction of the thickness between one principal surface and the other principal surface, so as to be arranged in a tuning fork shape with one end fixed,
wherein two electrodes (19, 20, 22, 23) divided along the longitudinal direction are formed on one principal surface of each of the two legs (16, 17; 85, 86; 103, 104) while an electrode (24; 82) is formed on the other principal surface of each of the two legs (16, 17; 85, 86; 103, 104),
wherein among the four electrodes (19, 20, 22, 23) formed on the one principal surfaces of the respective two legs (16, 17; 85, 86; 103, 104), two electrodes disposed inside-to-inside (20, 22) or outside-to-outside (19, 23) are connected together to define a driving electrode, and the remaining two electrodes become a detection electrode serving also as a feedback electrode, and
wherein the electrodes (24; 82) formed on the other principal surfaces of the two legs (16, 17; 85, 86; 103, 104) are connected together, and are connected to a reference voltage or are floated.

2. A gyroscope according to Claim 1, wherein the tuning fork vibrator comprises:
a long plate-like vibration unit (13; 83) having one principal surface and the other principal surface and formed by bonding piezoelectric members (11, 12; 81) polarized opposite to each other in a direction of the thickness between one principal surface and the other principal surface;
a base (14; 84; 141; 161) disposed at one end in the longitudinal direction of the other principal surface of the vibration unit; and
at least one slit (15; 101, 102) extending along the longitudinal direction for dividing the vibration unit into the at least two legs (16, 17; 85, 86; 103, 104) symmetrically along the longitudinal direction,
wherein the slit (15; 101, 102) includes a portion of the base (14; 84; 141; 161) close to the vibration unit.

3. A vibrating gyroscope comprising a tuning fork vibrator (60) having two long legs (65, 66) each formed by bonding a piezoelectric member (11), polarized in the thickness direction and having two electrodes (19, 20, 22, 23) divided along the longitudinal direction on one principal surface and an electrode (61) on the other principal surface, to a non-piezoelectric element (62), so as to have the one principal surface and the other principal surface, respectively, and to be arranged in a tuning fork shape with one end fixed,
wherein among the four electrodes (19, 20, 22, 23) formed on the one principal surface of the respective two legs (65, 66), two electrodes disposed inside-to-inside (20, 22) or outside-to-outside (19, 23) are connected together to have a driving electrode and the remaining two electrodes become a detection electrode serving also as a feedback electrode, and
wherein the electrodes (61) formed on the other principal surfaces of the two legs (65, 66) are further connected together while being connected to a reference voltage or being floated.

4. A gyroscope according to Claim 3, wherein the tuning fork vibrator comprises:
a long plate-like vibration unit (63) having one principal surface and the other principal surface and formed by bonding a piezoelectric member (11) polarized in the thickness direction to a non-piezoelectric element (62);
a base (64) disposed at one end in the longitudinal direction of the other principal surface of the vibration unit; and
at least one slit (15) extending along the longitudinal direction for dividing the vibration unit into the at least two legs (65, 66) symmetrically along the longitudinal direction, and
wherein the slit (15) includes a portion of the base (64) close to the vibration unit (63).

5. A vibrating gyroscope comprising a tuning fork vibrator (70) that comprises two long legs (73, 74) comprising a non-piezoelectric material and is arranged in a tuning fork shape with one end fixed,
wherein two piezoelectric elements (75, 76, 77, 78) polarized in a thickness direction are provided on one principal surface of each of the two legs (73, 74) along the longitudinal direction, each of the piezoelectric elements (75, 76, 77, 78) including a lower electrode, a piezoelectric layer formed on the lower electrode, and an upper electrode formed on the piezoelectric layer, and
wherein among the four upper electrodes, two electrodes disposed inside-to-inside or outside-to-outside are connected together to have a driving electrode and the remaining two electrodes become a detection electrode serving also as a feedback electrode, and the entire lower electrodes are connected together while being connected to a reference voltage or being floated.

6. A gyroscope according to Claim 5, wherein the tuning fork vibrator (70) comprises:
a long plate-like vibration unit having one principal surface and the other principal surface, said vibration unit comprising a non-piezoelectric material (71) in which a piezoelectric element (75, 76, 77, 78) polarized in the thickness direction of the vibration unit is provided on one principal surface of the vibration unit;
a base (72) disposed at one end in the longitudinal direction of the other principal surface of the vibration unit; and
at least one slit (15) extending along the longitudinal direction for dividing the vibration unit into the at least two legs (73, 74) symmetrically along the longitudinal direction, and
wherein the slit (15) includes a portion of the base (72) close to the vibration unit.

7. An electronic apparatus comprising a vibrating gyroscope according to one of Claims 1 to 6.

## Patentansprüche

1. Ein Vibrationsgyroskop (50; 120; 180), das ein Stimmgabelschwingungselement (10; 80; 100; 110; 140; 160) mit zwei langen Schenkeln (16, 17; 85, 86; 103, 104) aufweist, gebildet durch Verbinden piezoelektrischer Bauglieder (11, 12; 81), die in einer Dickerichtung entgegengesetzt zueinander polarisiert sind, zwischen einer Hauptoberfläche und der anderen Hauptoberfläche, um in einer Stimmgabelform mit einem Ende fixiert angeordnet zu sein,
wobei zwei Elektroden (19, 20, 22, 23), geteilt entlang der longitudinalen Richtung, auf einer Hauptoberfläche von jedem der zwei Schenkel (16, 17; 85, 86; 103, 104) gebildet sind, während eine Elektrode (24; 82) auf der anderen Hauptoberfläche von jedem der zwei Schenkel (16, 17; 85, 86; 103, 104) gebildet ist,
wobei von den vier Elektroden (19, 20, 22, 23), die auf den einen Hauptoberflächen der jeweils zwei Schenkel (16, 17; 85, 86; 103, 104) gebildet sind, zwei Elektroden, die Innenseite-zu-Innenseite (20, 22) oder Außenseite-zu-Außenseite (19, 23) angeordnet sind, miteinander verbunden sind, um eine Antriebselektrode zu definieren, und die verbleibenden zwei Elektroden eine Erfassungselektrode werden, die ebenfalls als eine Rückkopplungselektrode dient, und
wobei die Elektroden (24; 82), die auf den anderen Hauptoberflächen der zwei Schenkel (16, 17; 85, 86; 103, 104) gebildet sind, miteinander verbunden sind und mit einer Referenzspannung verbunden sind oder floatend sind.

2. Ein Gyroskop gemäß Anspruch 1, bei dem das Stimmgabelschwingungselement folgende Merkmale aufweist:
eine lange plattenartige Schwingungseinheit (13; 83) mit einer Hauptoberfläche und der anderen Hauptoberfläche, und gebildet durch Verbinden von piezoelektrischen Baugliedern (11, 12; 81), die in einer Dickerichtung entgegengesetzt zueinander polarisiert sind, zwischen einer Hauptoberfläche und der anderen Hauptoberfläche;
eine Basis (14; 84; 141; 161), die an einem Ende in der longitudinalen Richtung der anderen Hauptoberfläche der Schwingungseinheit angeordnet ist; und
zumindest einen Schlitz (15; 101, 102), der sich entlang der longitudinalen Richtung erstreckt, zum symmetrischen Teilen der Schwingungseinheit in die zumindest zwei Schenkel (16, 17; 85, 86; 103, 104) entlang der longitudinalen Richtung,
wobei der Schlitz (15; 101, 102) einen Abschnitt der Basis (14; 84; 141; 161) nahe der Schwingungseinheit umfasst.

3. Ein Vibrationsgyroskop, das ein Stimmgabelschwingungselement (60) mit zwei langen Schenkeln (65, 66) aufweist, jeweils gebildet durch Verbinden eines piezoelektrischen Bauglieds (11), das in der Dickerichtung polarisiert ist und zwei Elektroden (19, 20, 22, 23), die entlang der longitudinalen Richtung geteilt sind, auf einer Hauptoberfläche und eine Elektrode (61) auf der anderen Hauptoberfläche aufweist, mit einem nicht piezoelektrischen Element (62), um die eine Hauptoberfläche beziehungsweise die andere Hauptoberfläche aufzuweisen, und um in einer Stimmgabelform mit einem Ende fixiert angeordnet zu sein,
wobei von den vier Elektroden (19, 20, 22, 23), die auf der einen Hauptoberfläche der jeweils zwei Schenkel (65, 66) gebildet sind, zwei Elektroden, die Innenseite-zu-Innenseite (20, 22) oder Außenseite-zu-Außenseite (19, 23) angeordnet sind, miteinander verbunden sind, um eine Antriebselektrode aufzuweisen, und die verbleibenden zwei Elektroden eine Erfassungselektrode werden, die ebenfalls als eine Rückkopplungselektrode dient, und
wobei die Elektroden (61), die auf den anderen Hauptoberflächen der zwei Schenkel (65, 66) gebildet sind, ferner miteinander verbunden sind, während dieselben mit einer Referenzspannung verbunden sind oder floatend sind.

4. Ein Gyroskop gemäß Anspruch 3, bei dem das Stimmgabelschwingungselement folgende Merkmale aufweist:
eine lange plattenartige Schwingungseinheit (63) mit einer Hauptoberfläche und der anderen Hauptoberfläche, und gebildet durch Verbinden eines piezoelektrischen Bauglieds (11), das in der Dickerichtung polarisiert ist, mit einem nicht piezoelektrischen Element (62);
eine Basis (64), die an einem Ende in der longitudinalen Richtung der anderen Hauptoberfläche der Schwingungseinheit angeordnet ist; und
zumindest einen Schlitz (15), der sich entlang der longitudinalen Richtung erstreckt, zum symmetrischen Teilen der Schwingungseinheit in die zumindest zwei Schenkel (65, 66) entlang der longitudinalen Richtung, und
wobei der Schlitz (15) einen Abschnitt der Basis (64) nahe der Schwingungseinheit (63) umfasst.

5. Ein Vibrationsgyroskop, das ein Stimmgabelschwingungselement (70) mit zwei langen Schenkeln (73, 74) aufweist, die ein nicht piezoelektrisches Material umfassen und in einer Stimmgabelform mit einem Ende fixiert angeordnet sind,
wobei zwei piezoelektrische Elemente (75, 76, 77, 78), die in einer Dickerichtung polarisiert sind, auf einer Hauptoberfläche von jedem der zwei Schenkel (73, 74) entlang der longitudinalen Richtung vorgesehen sind, wobei jedes der piezoelektrischen Elemente (75, 76, 77, 78) eine untere Elektrode, eine piezoelektrische Schicht, die auf der unteren Elektrode gebildet ist, und eine obere Elektrode umfasst, die auf der piezoelektrischen Schicht gebildet ist, und
wobei von den vier oberen Elektroden zwei Elektroden, die Innenseite-zu-Innenseite oder Außenseite-zu-Außenseite angeordnet sind, miteinander verbunden sind, um eine Antriebselektrode aufzuweisen, und die verbleibenden zwei Elektroden eine Erfassungselektrode werden, die ebenfalls als eine Rückkopplungselektrode dient, und die gesamten unteren Elektroden miteinander verbunden sind, während dieselben mit einer Referenzspannung verbunden sind oder floatend sind.

6. Ein Gyroskop gemäß Anspruch 5, bei dem das Stimmgabelschwingungselement (70) folgende Merkmale aufweist:
eine lange plattenartige Schwingungseinheit mit einer Hauptoberfläche und der anderen Hauptoberfläche, wobei die Schwingungseinheit ein nicht piezoelektrisches Material (71) aufweist, in dem ein piezoelektrisches Element (75, 76, 77, 78), das in der Dickerichtung der Schwingungseinheit polarisiert ist, auf einer Hauptoberfläche der Schwingungseinheit vorgesehen ist;
eine Basis (72), die an einem Ende in der longitudinalen Richtung der anderen Hauptoberfläche der Schwingungseinheit angeordnet ist; und
zumindest einen Schlitz (15), der sich entlang der longitudinalen Richtung erstreckt, zum symmetrischen Teilen der Schwingungseinheit in die zumindest zwei Schenkel (73, 74) entlang der longitudinalen Richtung, und
wobei der Schlitz (15) einen Abschnitt der Basis (72) nahe der Schwingungseinheit umfasst.

7. Eine elektronische Vorrichtung, die ein Vibrationsgyroskop gemäß einem der Ansprüche 1 bis 6 aufweist.

## Revendications

1. Gyroscope vibrant (50 ; 120 ; 180) comprenant un vibrateur à diapason (10 ; 80 ; 100 ; 110 ; 140 ; 160) comportant deux longues branches (16, 17 ; 85, 86 ; 103, 104) formées en collant des éléments piézoélectriques (11, 12 ; 81) polarisés à l'opposé l'un de l'autre dans une direction de l'épaisseur entre une surface principale et l'autre surface principale, de manière à être agencées en la forme d'un diapason avec une extrémité fixe,
dans lequel deux électrodes (19, 20, 22, 23) divisées le long de la direction longitudinale sont formées sur une surface principale de chacune des deux branches (16, 17 ; 85, 86 ; 103, 104) tandis qu'une électrode (24 ; 82) est formée sur l'autre surface principale de chacune des deux branches (16, 17 ; 85, 86 ; 103, 104),
dans lequel, parmi les quatre électrodes (19, 20, 22, 23) formées sur ladite une surface principale des deux branches (16, 17 ; 85, 86 ; 103, 104) respectives, deux électrodes disposées intérieur vers intérieur (20, 22) ou extérieur vers extérieur (19, 23) sont connectées l'une à l'autre pour définir une électrode de commande, et les deux électrodes restantes deviennent une électrode de détection servant également en tant qu'électrode de rétroaction, et
dans lequel les électrodes (24 ; 82) formées sur les autres surfaces principales des deux branches (16, 17 ; 85, 86 ; 103, 104) sont connectées l'une à l'autre, et sont connectées à une tension de référence ou sont flottantes.

2. Gyroscope selon la revendication 1, dans lequel le vibrateur à diapason comprend :
une unité de vibration (13 ; 83) semblable à une longue plaque comportant une surface principale et l'autre surface principale et formée en collant des éléments piézoélectriques (11, 12 ; 81) polarisés à l'opposé l'un de l'autre dans une direction de l'épaisseur entre une surface principale et l'autre surface principale ;
une base (14 ; 84 ; 141 ; 161) disposée à une extrémité dans la direction longitudinale de l'autre surface principale de l'unité de vibration ; et
au moins une fente (15 ; 101, 102) s'étendant le long de la direction longitudinale pour diviser l'unité de vibration en lesdites au moins deux branches (16, 17 ; 85, 86 ; 103, 104) symétriquement le long de la direction longitudinale,
dans lequel la fente (15 ; 101, 102) comprend une partie de la base (14 ; 84 ; 141 ; 161) à proximité de l'unité de vibration.

3. Gyroscope vibrant comprenant un vibrateur à diapason (60) comportant deux longues branches (65, 66) formées chacune en collant un élément piézoélectrique (11), polarisé dans la direction d'épaisseur et comportant deux électrodes (19, 20, 22, 23) divisées le long de la direction longitudinale sur une surface principale et une électrode (61) sur l'autre surface principale, à un élément non piézoélectrique (62), de manière à avoir ladite une surface principale et l'autre surface principale, respectivement, et pour être agencées en la forme d'un diapason avec une extrémité fixe,
dans lequel, parmi les quatre électrodes (19, 20, 22, 23) formées sur ladite une surface principale des deux branches (65, 66) respectives, deux électrodes disposées intérieur vers intérieur (20, 22) ou extérieur vers extérieur (19, 23) sont connectées l'une à l'autre pour avoir une électrode de commande et les deux électrodes restantes deviennent une électrode de détection servant également en tant qu'électrode de rétroaction, et
dans lequel les électrodes (61) formées sur les autres surfaces principales des deux branches (65, 66) sont en outre connectées l'une à l'autre tout en étant connectées à une tension de référence ou en étant flottantes.

4. Gyroscope selon la revendication 3, dans lequel le vibrateur à diapason comprend :
une unité de vibration (63) semblable à une longue plaque comportant une surface principale et l'autre surface principale et formée en collant un élément piézoélectrique (11) polarisé dans la direction d'épaisseur à un élément non piézoélectrique (62) ;
une base (64) disposée à une extrémité dans la direction longitudinale de l'autre surface principale de l'unité de vibration ; et
au moins une fente (15) s'étendant le long de la direction longitudinale pour diviser l'unité de vibration en lesdites au moins deux branches (65, 66) symétriquement le long de la direction longitudinale, et
dans lequel la fente (15) comprend une partie de la base (64) à proximité de l'unité de vibration (63).

5. Gyroscope vibrant comprenant un vibrateur à diapason (70) qui comprend deux longues branches (73, 74) comprenant un matériau non piézoélectrique et qui est agencé en la forme d'un diapason avec une extrémité fixe,
dans lequel deux éléments piézoélectriques (75, 76, 77, 78) polarisés dans une direction d'épaisseur sont prévus sur une surface principale de chacune des deux branches (73, 74) le long de la direction longitudinale, chacun des éléments piézoélectriques (75, 76, 77, 78) comprenant une électrode inférieure, une couche piézoélectrique formée sur l'électrode inférieure et des électrodes supérieures formées sur la couche piézoélectrique, et
dans lequel, parmi les quatre électrodes supérieures, deux électrodes disposées intérieur vers intérieur ou extérieur vers extérieur sont connectées l'une à l'autre pour avoir une électrode de commande et les deux électrodes restantes deviennent une électrode de détection servant également en tant qu'électrode de rétroaction, et les électrodes inférieures entières sont connectées l'une à l'autre tout en étant connectées à une tension de référence ou en étant flottantes.

6. Gyroscope selon la revendication 5, dans lequel le vibrateur à diapason (70) comprend :
une unité de vibration semblable à une longue plaque comportant une surface principale et l'autre surface principale, ladite unité de vibration comprenant un matériau non piézoélectrique (71) dans lequel un élément piézoélectrique (75, 76, 77, 78) polarisé dans la direction d'épaisseur de l'unité de vibration est prévu sur une surface principale de l'unité de vibration ;
une base (72) disposée à une extrémité dans la direction longitudinale de l'autre surface principale de l'unité de vibration ; et
au moins une fente (15) s'étendant le long de la direction longitudinale pour diviser l'unité de vibration en lesdites au moins deux branches (73, 74) symétriquement le long de la direction longitudinale, et
dans lequel la fente (15) comprend une partie de la base (72) à proximité de l'unité de vibration.

7. Dispositif électronique comprenant un gyroscope vibrant selon l'une des revendications 1 à 6.
